(19) Europäisches Patentamt
European Patent Office
Office européen des brevets

(11) **EP 2 172 926 A1**

(12) **EUROPEAN PATENT APPLICATION**
published in accordance with Art. 153(4) EPC

(43) Date of publication:
**07.04.2010 Bulletin 2010/14**

(21) Application number: **07767939.7**

(22) Date of filing: **29.06.2007**

(51) Int Cl.:
*G09G 5/36* (2006.01)    *G06F 3/048* (2006.01)
*G06F 17/21* (2006.01)    *G06Q 10/00* (2006.01)

(86) International application number:
**PCT/JP2007/063154**

(87) International publication number:
**WO 2009/004692 (08.01.2009 Gazette 2009/02)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Fujitsu Limited**
**Kawasaki-shi, Kanagawa 211-8588 (JP)**

(72) Inventors:
• **TERAZONO, Kohei**
  **Kawasaki-shi**
  **Kanagawa 211-8588 (JP)**

• **IWATA, Satoshi**
  **Kawasaki-shi**
  **Kanagawa 211-8588 (JP)**
• **OKADA, Yoshiyuki**
  **Kawasaki-shi**
  **Kanagawa 211-8588 (JP)**

(74) Representative: **Fenlon, Christine Lesley et al**
  **Haseltine Lake LLP**
  **Lincoln House, 5th Floor**
  **300 High Holborn**
  **London WC1V 7JH (GB)**

(54) **INFORMATION DISPLAY DEVICE, INFORMATION DISPLAY METHOD, AND INFORMATION DISPLAY PROGRAM**

(57) An information display method displays a plurality of display frames arranged in a table on a display screen. Each of the display frames enables display of a plurality of information pieces, and a selected display frame is enlargeable, while non-selected display frames are reduced according to an enlargement ratio of the enlarged display frame. Each of information candidates to be displayed in respective display frames includes an attribute of a display priority and an attribute of a display character size, and an information display operation is carried out, based on a size of each of the display frames, by deciding the display priority and the display character size of each of the information candidates to be displayed in the respective display frames. Consequently, a large amount of information can be displayed, and easy operation can be realized.

Fig.3

EP 2 172 926 A1

**Description**

FIELD

The present invention relates to an information display device, an information display method and an information display program, wherein information is displayed in a frame of which longitudinal and lateral sizes are changeable within a display screen having a predetermined size.

BACKGROUND

In recent years, portable terminals, such as mobile phones (cell-phones) or PDAs (Personal Digital Assistants), have been remarkably improved by incorporating various kinds of functions. In these portable terminals, an information display program has been carried out to display information in a frame of which longitudinal and lateral directions are changeable within a display screen having a predetermined size.

Note that the present invention is not only applied to portable terminals, such as mobile phones, PDAs and the like, but also widely applied to an apparatus having an information display unit, for example, a computer or electronic paper.

In the prior art, there is proposed a portable terminal having a function of automatically modifying information quantity and displaying the information in a display frame based on a display frame size, so that a user can easily confirm all of the displayed information.

For example, in the prior art, there is proposed a control terminal device, in which a calendar metaphor is used to sensuously understand the information, and a display ratio between a selected display area and other unselected display areas is modified to display more amount of information in the selected display area (for example, refer to Patent Document 1).

Note that the display form applying a metaphor is not only used for the calendar metaphor, but also a ToDo list of paying attention to a time-axis or a map (including pictures and character strings) of paying attention to a location.

Further, for example, in the prior art, there is proposed an information display device for realizing a partially expanding display function capable of additionally displaying configuration information requested by a user on a display screen of which size is limited and for improving a display function by an external input operation. The information display device includes a control device for displaying the configuration information in a divided display area, and when a request for enlarging a width of a specific divided display area corresponding to a display item requested by the user is input, the width of the specific divided display area is enlarged and the other divided display areas are reduced, so that the configuration information for the item is additionally displayed in the specific display area (for example, refer to Patent Document 2).

Patent Document 1: Japanese Laid-open Patent Publication No. 2000-357036
Patent Document 2: Japanese Laid-open Patent Publication No. 2004-021704

DISCLOSURE OF THE INVENTION

PROBLEMS TO BE SOLVED BY THE INVENTION

In the prior art, a method of displaying a plurality of information pieces on a display screen having a predetermined size to be divided into a plurality of frames is, for example, used in spreadsheet software. In the spreadsheet software, when a large amount of information is displayed in one frame, the frame is enlarged and the large amount of information may be displayed in the enlarged frame.

However, in the prior art spreadsheet software, when a specific frame is enlarged to display a large amount of information, some other frames are pushed out from the display screen, and the information included in the pushed out frames may be lost. In calendar software for displaying schedules of respective days of a calendar, the above information loss is a serious problem.

Specifically, for example, in the calendar software for displaying schedules on a display screen, when enlarging one frame to display a lot of schedules for a particular day, frames for the other days may not be displayed on the display screen. Therefore, the user cannot easily modify the schedules of the particular day and cannot conveniently refer the schedules, since the relationship between the particular day and the other days, or the particular day within the month cannot be clearly confirmed.

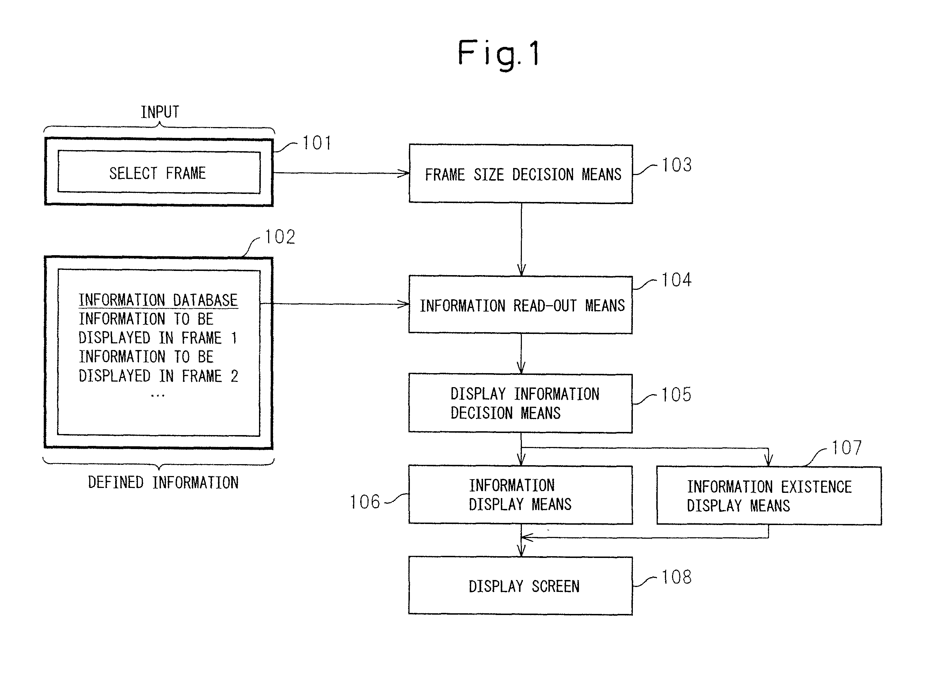

FIG. 1 is a block diagram schematically showing an example of an information display device applying a prior art information display method, and more particularly, FIG. 1 schematically shows a control terminal device having a display device described in the above-cited patent document 1.

In FIG. 1, reference numeral 103 denotes a frame size decision means, 104 denotes an information read-out means, 105 denotes a display information decision means, 106 denotes an information display means, 107 denotes an information existence display means, and 108 denotes a display screen. Further, reference numeral 101 denotes input information, for example, a frame selection information input by a user, and 102 denotes defined information, for example, an information database. The information database 102 includes information of respective frames (information to be displayed in frame 1, information to be displayed in frame 2, ...).

As shown in FIG. 1, the prior art information display device comprises the frame size decision means 103 for deciding a frame size of the specific frame based on the input information 101 input by the user; the information read-out means 104 for reading out information to be displayed in the specific frame of which size is decided by the information database 102; the display information decision means 105 for deciding information to be displayed in the specific frame based on the read-out information; the information display means 106 for displaying the decided information on the display screen 108; and the information existence display means 107 for displaying whether or not the information to be displayed on the display screen exists.

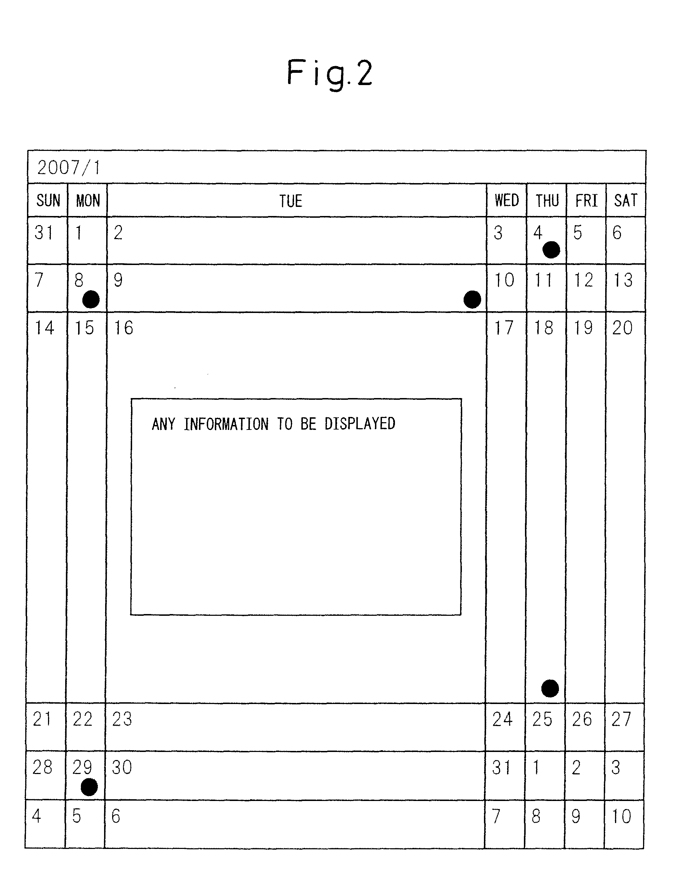

FIG. 2 is a diagram showing an example of a display image obtained by an example of the prior art information display method.

As shown in FIG. 2, in a prior art information display device, for example, a large amount of information for a selected day can be displayed in a display frame for the selected day, however, only date information and marks (black circle marks) for non-selected days are displayed in non-selected frames, so that calendar information is not sufficiently displayed on the display screen.

It is an object of the present invention to provide an information display device, an information display method and an information display program for showing a large amount of information and enabling an easy operation.

SUMMARY

According to a first aspect of the present invention, there is provided an information display method of displaying a plurality of display frames arranged in a table on a display screen, each of the display frames enabling display of a plurality of information pieces, a selected display frame being enlargeable, while non-selected display frames are reduced according to an enlargement ratio of the enlarged display frame, wherein each of information candidates to be displayed in respective display frames includes an attribute of a display priority and an attribute of a display character size; and an information display operation is carried out, based on a size of each of the display frames, by deciding the display priority and the display character size of each of the information candidates to be displayed in the respective display frames.

According to a second aspect of the present invention, there is provided an information display device comprising a display device for displaying a plurality of display frames arranged in a table on a display screen, and a display processing unit configured to display a plurality of information pieces in each of the display frames, enabling enlargement of a selected display frame, and reduction of non-selected display frames according to an enlargement ratio of the enlarged display frame, wherein each information candidate to be displayed in respective display frames includes an attribute of a display priority and an attribute of a display character size; and the display processing unit carries out an information display operation, based on the size of each of the display frames, by deciding the display priority and the display character size of each of the information candidates to be displayed in the respective display frames.

According to a third aspect of the present invention, there is provided an information display program of displaying a plurality of display frames arranged in a table on a display screen, each of the display frames enabling display of a plurality of information pieces, a selected display frame being enlargeable, while non-selected display frames are reduced according to an enlargement ratio of the enlarged display frame, wherein each information candidate to be displayed in respective display frames includes an attribute of a display priority and an attribute of a display character size; and an information display operation is carried out, based on a size of each of the display frames, by deciding the display priority and the display character size of each of the information candidates to be displayed in the respective display frames.

EFFECT OF THE INVENTION

According to the present invention, it is possible to provide an information display device, an information display method and an information display program for showing a large amount of information and enabling easy operation.

BRIEF DESCRIPTION OF DRAWINGS

FIG. 1 is a block diagram schematically showing an example of an information display device applying a prior art information display method.

FIG. 2 is a diagram showing an example of a display image obtained by an example of the prior art information display method.

FIG. 3 is a block diagram schematically showing an example of an information display device applying an information display method according to the present invention.

FIG. 4A is a diagram (part 1) showing an example of a display image obtained by an embodiment of the information display method according to the present invention.

FIG. 4B is a diagram (part 2) showing an example of a display image obtained by an embodiment of the information display method according to the present invention.

FIG. 4C is a diagram (part 3) showing an example of a display image obtained by an embodiment of the information display method according to the present invention.

FIG. 5 is a diagram showing an example of an icon displayed in the display image obtained by an embodiment of the information display method according to the present invention.

FIG. 6A is a diagram (part 1) explaining calculations of display frame sizes in an embodiment of the information display method according to the present invention.

FIG. 6B is a diagram (part 2) explaining calculations of display frame sizes in an embodiment of the information display method according to the present invention.

FIG. 7A is a diagram (part 1) explaining a calculation of an arrangement region in an embodiment of the information display method according to the present invention.

FIG. 7B is a diagram (part 2) explaining a calculation of an arrangement region in an embodiment of the information display method according to the present invention.

FIG. 8A is a diagram (part 1) explaining an example of a region arrangement pattern in an embodiment of the information display method according to the present invention.

FIG. 8B is a diagram (part 2) explaining an example of a region arrangement pattern in an embodiment of the information display method according to the present invention.

FIG. 8C is a diagram (part 3) explaining an example of a region arrangement pattern in an embodiment of the information display method according to the present invention.

FIG. 8D is a diagram (part 4) explaining an example of a region arrangement pattern in an embodiment of the information display method according to the present invention.

FIG. 9 is a block diagram showing an embodiment of an information display device applying the information display method according to the present invention.

FIG. 10A is a flowchart (part 1) explaining an operation of an embodiment of the information display method according to the present invention.

FIG. 10B is a flowchart (part 2) explaining an operation of an embodiment of the information display method according to the present invention.

FIG. 10C is a flowchart (part 3) explaining an operation of an embodiment of the information display method according to the present invention.

FIG. 10D is a flowchart (part 4) explaining an operation of an embodiment of the information display method according to the present invention.

FIG. 10E is a flowchart (part 5) explaining an operation of an embodiment of the information display method according to the present invention.

FIG. 10F is a flowchart (part 6) explaining an operation of an embodiment of the information display method according to the present invention.

FIG. 11A is a perspective view showing an example of a mobile phone applying the information display method according to the present invention.

FIG. 11B is a perspective view showing another example of a mobile phone applying the information display method according to the present invention.

FIG. 12 is a perspective view showing an example of a mobile phone applying the information display method according to the present invention.

DESCRIPTION OF REFERENCES

1, 101     input information
2, 102     defined information
3, 103     frame size decision means
4, 104     information read-out means

| 5, 105 | display information decision means |
| 8, 108 | display screen |
| 11 | select frame |
| 12 | enlargement ratio |
| 21 | information database |
| 22 | attribute information |
| 91 | character size decision means |
| 92 | arrangement region decision means |
| 93 | priority modification means |
| 94 | character string display means |
| 95 | icon display means |
| 106 | information display means |
| 107 | information existence display means |
| 201 | input section |
| 202 | memory section (database) |
| 203 | display section of display frames |
| 204 | display information decision section |
| 205 | information display section |
| 206 | display device |
| 210 | numeric key portion |
| 211 | enlarge operation key |
| 212 | reduce operation key |
| 220 | direction key |
| 230 | enlarge/reduce lever |
| 310 | processing apparatus |
| 311 | arithmetic processing unit |
| 312 | processing apparatus local memory |
| 320 | program (data) provider |
| 321 | program storing means (remote memory) |
| 330 | portable recording medium |

## DESCRIPTION OF EMBODIMENTS

Below, preferred embodiments of an information display device, information display method and information display program according to the present invention will be described in detail with reference to the accompanying drawings.

## EMBODIMENTS

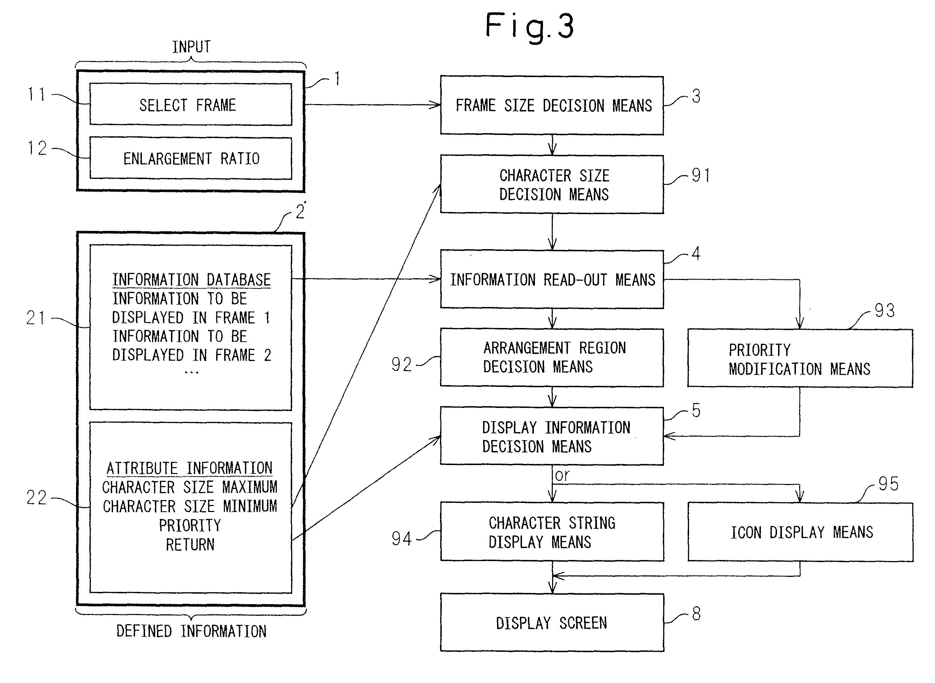

FIG. 3 is a block diagram schematically showing an example of an information display device applying an information display method according to the present invention.

As shown in FIG. 3, an embodiment of the information display device comprises a frame size decision means 3, a character size decision means 91, an information read-out means 4, an arrangement region decision means 92, a priority modification means 93, a display information decision means 5, a character string display means 94, an icon display means 95, and a display screen 8.

In FIG. 3, reference numeral 1 denotes input information including, for example, information of a frame to be selected and an enlargement ratio input by a user, and 2 denotes defined information, such as information of an information database 21 and attribute information 22. Here, the information database 21 includes, for example, information of respective frames (information to be displayed in frame 1, information to be displayed in frame 2, ...), and the attribute information 22 includes maximum and minimum values of a character size, a priority, a return instruction, and the like, which will be explained below. Further, for example, a plurality of display frames arranged in a table which constitutes about one calendar month can be displayed on the display screen 8.

The frame size decision means 3 decides longitudinal and lateral sizes of each of the display frames based on a size of the display screen 8 and an enlargement ratio of the display frame. The character size decision means 91 decides a character size based on maximum and minimum values of the character size and a display frame size. The information read-out means 4 fetches (reads out) information candidates to be displayed in the display frames from the information database 21.

The arrangement region decision means 92 decides an arrangement region based on the display frame size and a display character size, and the display information decision means 5 decides a character string to be actually displayed based on a size of the arrangement region and priorities of the information candidates. The character string display means 94 displays the character string in the arrangement region, and the icon display means 95 displays an icon in the arrangement region. The priority modification means 93 modifies priorities of the information candidates of the non-selected frames based on the information of the selected frame.

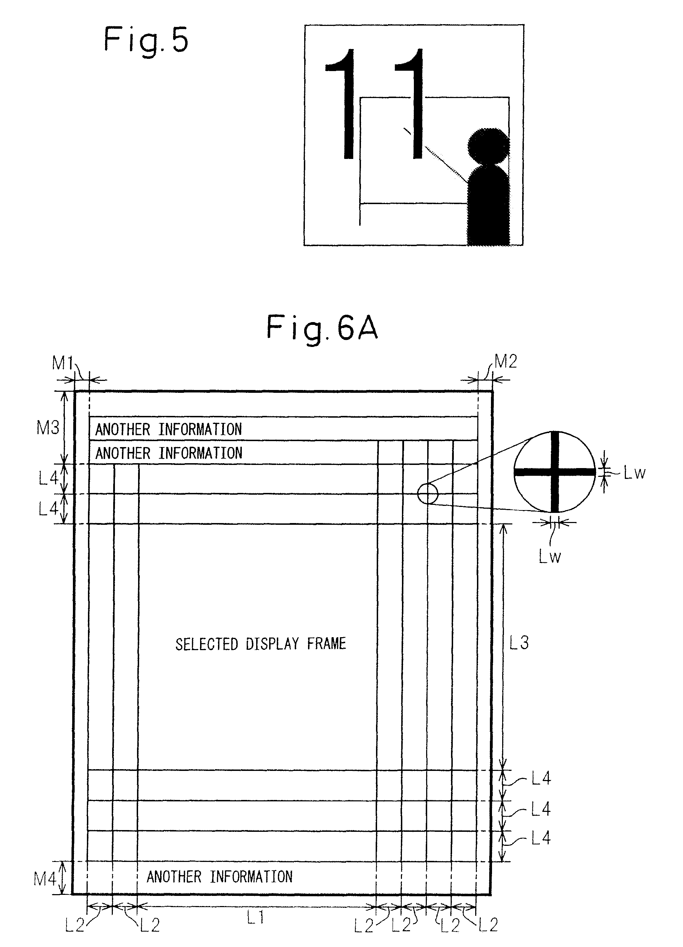

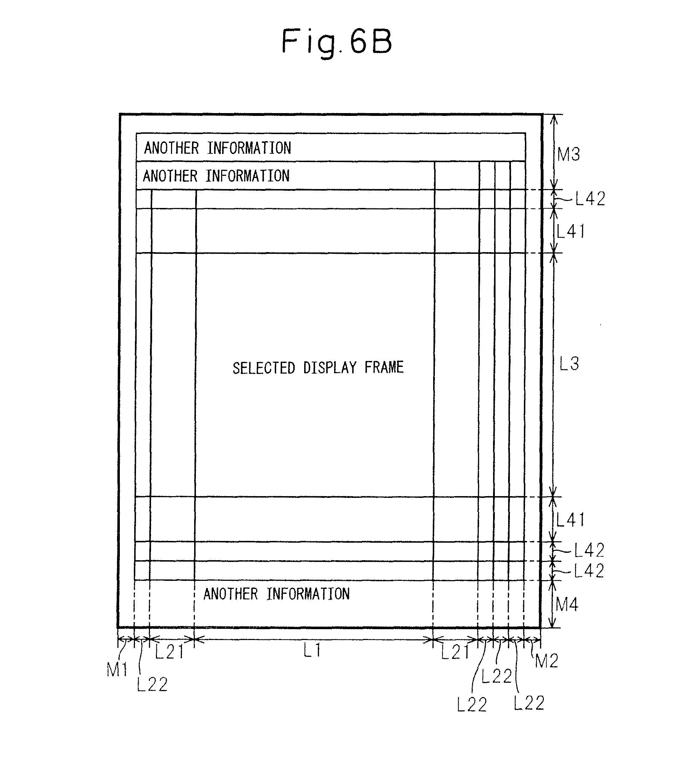

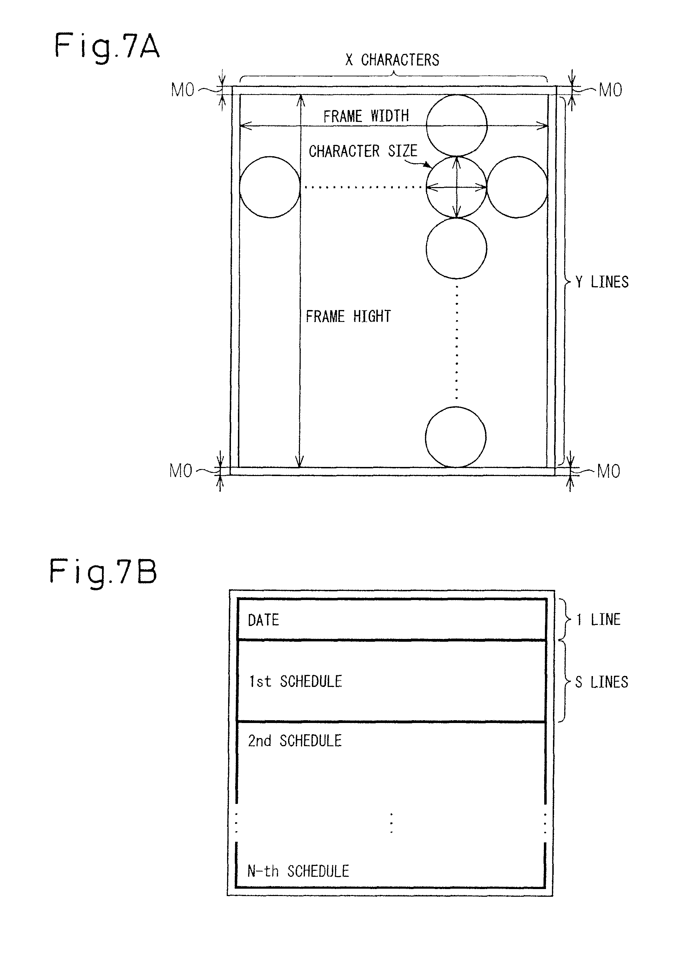

When an enlargement ratio of a selected display frame to be enlarged in a plurality of display frames is input, the frame size decision means 3 calculates and decides longitudinal and lateral sizes of all of the display frames. Note that a method of calculating longitudinal and lateral sizes of the display frames and a method of calculating arrangement regions where character strings are displayed will be explained later with reference to FIGS. 6A and 6B, and FIGS. 7A and 7B, in detail.

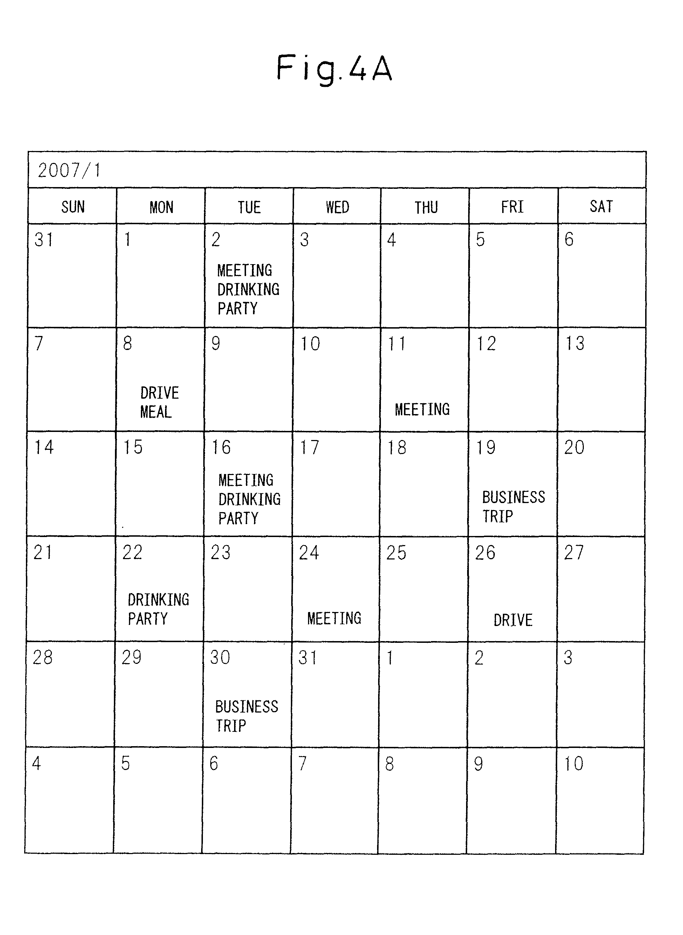

FIGS. 4A to 4C are diagrams showing examples of display images obtained by an embodiment of the information display method according to the present invention, and FIG. 5 is a diagram showing an example of an icon displayed in the display image obtained by an embodiment of the information display method according to the present invention.

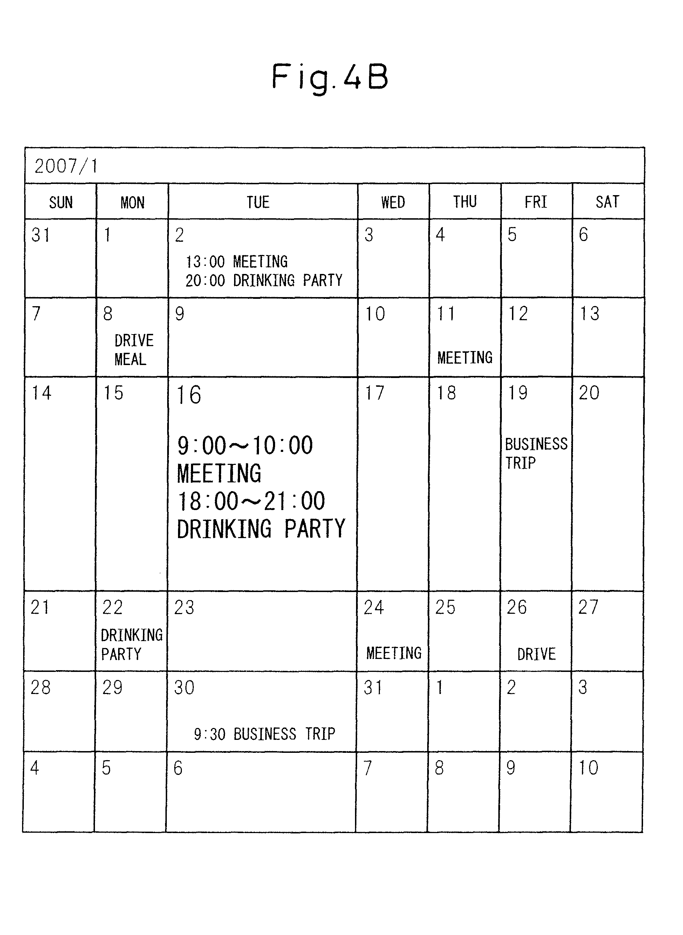

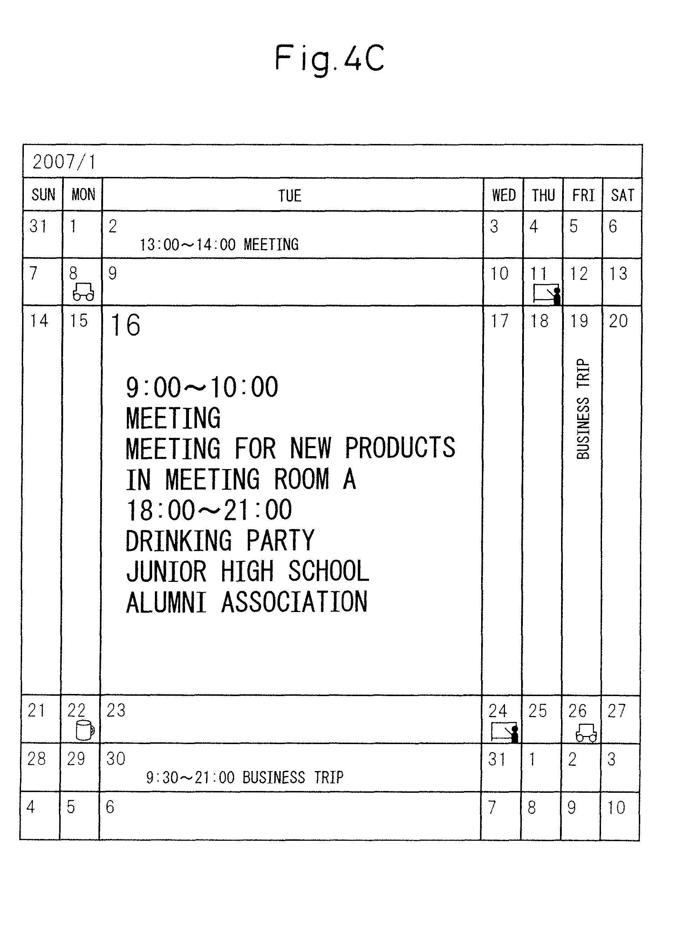

Specifically, FIGS. 4A to 4C shows examples of a calendar to be displayed on a display screen 8, wherein FIG. 4A shows a non-enlarged display image, FIG. 4B shows an enlarged display image, and FIG. 4C shows a maximum-enlarged display image. Here, on the display screen 8, about one-month calendar, for example, from December 31, 2006 to February 10, 2007 including all days of January, 2007 is displayed. The image displayed in the display screen 8 is not limited to one-month calendar, but various kinds of images formed by a plurality of frames arranged in a table can be displayed on the display screen 8.

As shown in FIGS. 4A to 4C, for example, with regard to 16th date (January 16, 2007), by modifying a size of a display frame (selected display frame) for 16th date, display frames located on an upper or lower side of the selected display frame (for example, display frames for January 2, 9, 23 and 30, and February 6) are modified to display information with enlarging lateral sizes of the display frames than those of display frames which are not located on the upper or lower side of the selected display frame (for example, display frames for January 11, 18 and 25). Further, display frames located on a left or right side of the selected display frame (for example, display frames for January 14, 15, 17, 18, 19 and 20) are modified to display information with enlarging longitudinal sizes of the display frames than those of display frames which are not located on the left or right side of the selected display frame (for example, display frames for January 9, 10 and 11).

FIG. 5 shows an example of an icon, which is, for example, displayed in a display frame for January 11 of a display image of FIG. 4C, and this icon represents a "meeting" which is used if the display frame is reduced and the term "meeting" cannot be displayed in the reduced display frame. Specifically, for example, the icon representing the "meeting", which is previously prepared, may be displayed in the reduced display frame, when the term "MEETING" having 7 characters cannot displayed in the reduced display frame.

FIGS. 6A and 6B are diagrams explaining calculations of display frame sizes in an embodiment of the information display method according to the present invention.

Specifically, FIG. 6A shows an display image when lateral sizes of display frames located on an upper or lower side of a selected display frame are enlarged than those of display frames which are not located on the upper or lower side of the selected display frame, and longitudinal sizes of display frames located on a left or right side of the selected display frame are enlarged than those of display frames which are not located the left or right side of the selected display frame, in the non-selected display frames.

Further, FIG. 6B shows an display image, in addition to the display image of FIG. 6A, when lateral sizes of display frames closely located on an upper or lower side of the selected display frame are enlarged than those of display frames which are not closely located on the upper or lower side of the selected display frame, and longitudinal sizes of display frames closely located on a left or right side of the selected display frame are enlarged than those of display frames which are not closely located on the left or right side of the selected display frame, in the non-selected display frames.

First, a method of calculating longitudinal and lateral sizes (longitudinal size H and lateral size W) of display frames will be explained with reference to FIG. 6A.

When an enlarge operation is not carried out, all sizes of the display frames are calculated as follows:

```
{lateral size of no enlarge operation} =
[{width (W) of display image} - {left and right margins
(M1+M2)} - {total of frame line width (Lw)}] ÷ {column
```

number}, and

{longitudinal size of no enlarge operation} =
[{height (H) of display image} - {upper and lower margins
(M3+M4)} - {total of frame line width ($L_W$)}] ÷ {line
number}.

When an enlarge operation is not carried out, a longitudinal size (L3) and a lateral size (L1) of the selected display frame are calculated as follows:

{longitudinal size (L3) of selected display
frame} = {longitudinal size of no enlarge operation} ×
{enlargement ratio}, and

{lateral size (L1) of selected display frame} =
{lateral size of no enlarge operation} × {enlargement
ratio}.

Further, a longitudinal size (L4) and a lateral size (L2) of each of the non-selected display frames are calculated as follows:

{longitudinal size (L4) of non-selected display
frame} = [{height (H) of display image} - {upper and
lower margins (M3+M4)} - {total of frame line width ($L_W$)}
- {longitudinal size (L3) of selected display frame}] ÷
{line number - 1}, and

{lateral size (L2) of non-selected display
frame} = [{width (W) of display image} - {left and right
margins (M1+M2)} - {total of frame line width ($L_W$)} -
{lateral size (L1) of selected display frame}] ÷ (column
number - 1).

Next, a method of calculating longitudinal and lateral sizes (longitudinal size H and lateral size W) of display frames will be explained with reference to FIG. 6B.
Similar to the above descriptions with reference to FIG. 6A, a longitudinal size (L3) and a lateral size (L1) of a selected display frame are calculated as follows:

{longitudinal size (L3) of selected display

```
frame} = {longitudinal lateral size of no enlarge
operation} × {enlargement ratio}, and
```

```
{lateral size (L1) of selected display frame} =
{lateral size of no enlarge operation} × {enlargement
ratio}.
```

Further, a longitudinal size (L41) of each of display frames which are closely located on an upper or lower side of the selected display frame, and a lateral size (L21) of each of display frames which are closely located on a left or right side of the selected display frame, in the non-selected display frames, are calculated as follows:

```
{longitudinal size (L41) closely located on
upper or lower side of selected display frame} =
{longitudinal size (L3) of selected display frame} ×
{enlargement ratio (equal or lower than 100%) of non-
selected display frame located on close to selected
display frame}, and
```

```
{lateral size (L21) closely located on left or
right side of selected display frame} = {lateral size
(L1) of selected display frame} × {enlargement ratio
(equal or lower than 100%) of non-selected display frame
located on close to selected display frame}.
```

Further, a longitudinal size (L42) of each of display frames which are not closely located on an upper or lower side of the selected display frame (display frames other than the display frames closely located on the upper or lower side of the selected display frame), and a lateral size (L22) of each of display frames which are not closely located on a left or right side of the selected display frame, in the non-selected display frames, are calculated as follows:

```
{longitudinal size (L42) not closely located on
upper or lower side of selected display frame} = [{height
(H) of display image} - {upper and lower margins (M3+M4)}
- {total of frame line width (Lw)} - {longitudinal size
```

```
(L3) of selected display frame} - {longitudinal size
(L41) closely located on upper or lower side of selected
display frame × 2}] ÷ {line number - 3}, and
```

$$\{\text{lateral size (L22) of display frame not closely located on left or right side of selected display frame}\} = [\{\text{width (W) of display image}\} - \{\text{left and right margins (M1+M2)}\} - \{\text{total of frame line width (L}_W\text{)}\} - \{\text{lateral size (L1) of selected display frame}\} - \{\text{lateral size (L21) closely located on left or right side of selected display frame} \times 2\}] \div \{\text{column number} - 3\}.$$

FIGS. 6A and 6B are diagrams explaining calculation methods of calculating respective display frame sizes, wherein the display frames can be variously changed, and thereby the calculation methods of calculating longitudinal and lateral sizes of the display frames will be variously modified.

As described above, the longitudinal and lateral sizes of each of the display frames are decided, and then character strings are displayed in the display frames by a specific character size between maximum and minimum values of the character size. Specifically, for example, a character size decision means defines a maximum value of the character size of 3mm to 4mm, which is considered as a preferable character size for a user to read easily, a minimum value of the character size of 1.5mm, which is considered as the smallest size for the user to read, and then decides a practically displaying character size between the maximum and minimum values.

The character size of 3mm to 4mm or 1.5mm are only examples, and are variously changed based on an age of the user, a distance between the user and a display device where character strings are displayed, a functional limit of the display device, and the like.

FIGS. 7A and 7B are diagrams explaining a calculation of an arrangement region in an embodiment of the information display method according to the present invention, and show one display frame (selected frame), respectively.

As shown in FIG. 7A, in a selected display frame, the relationship between a display frame size and a character size is defined as follows:

$$\{\text{character size of not-enlarged state}\} = \{\text{longitudinal size of not-enlarged state}\} \div \{N\},$$

where, the character size of not-enlarged state is defined to "a character size when N lines are arranged in a longitudinal direction of the selected display frame which is not enlarged". Here, N depends on amount of information required for displaying in the not-enlarged state, and a value of N is defined based on a purpose of use.

Next, so as to decide sizes of respective display frames and character sizes used in the respective display frames, after deciding the size of the selected display frame, an enlargement ratio of character size is determined to smaller one of longitudinal and lateral enlargement ratios which are calculated as follows:

$$\{\text{longitudinal enlargement ratio of display frame}\} = \{\text{longitudinal size of display frame}\} \div \{\text{longitudinal size of not-enlarged state}\}, \text{ and}$$

$$\{\text{lateral enlargement ratio of display frame}\} = \{\text{lateral size of display frame}\} \div \{\text{lateral size of not-enlarged state}\}.$$

Further, a display character size to be used for displaying is calculated as follows:

$${display character size} = {character size of}$$

$$not\text{-}enlarged state} \times {enlargement ratio of character}$$

$$size}.$$

When the character size obtained by the above calculation is larger than the maximum value of the character size, the display character size is changed to the maximum value of the character size. Further, when the character size obtained by the above calculation is smaller than the minimum value of the character size, the display character size is changed to the minimum value of the character size.

As described above, in the selected display frame, X (= {lateral size} ö {character size}) characters in the lateral direction and Y (= {longitudinal size} ö {character size}) lines in the longitudinal direction are obtained. Here, in FIG. 7A, a space (margin) M0 is provided at upper, lower, left and right sides of the selected display frame, respectively, so as to easily confirm the contents displayed in the selected display frame.

Further, as shown in FIG. 7B, in the selected display frame, date and schedules are arranged. Here, in FIG. 7B, a line number S assigned to each of the schedules is calculated as follows:

$${line number (S) assigned to each of schedules}$$

$$= {Y-1} \div {number (N) of schedules}$$

With reference to the above described FIG. 3, the arrangement region decision means 92 decides an arrangement region based on the display frame size and the display character size, which is a means for deciding regions of the display frame to be used and, for example, the means divides a display frame into a plurality of regions to display a plurality of schedules. Specifically, the arrangement region decision means 92 arranges a plurality of regions to display high priority information pieces in the display frame as much as possible, based on a condition how many characters are displayed in the longitudinal and lateral directions of an arrangement region.

The display information decision means 5 decides a character string to be actually displayed in the arrangement region, based on a size of the arrangement region and priorities of the information candidates output from the arrangement region decision means 92 and the priority modification means 93, with assigning character strings from a higher priority to a lower priority of the information candidates. When assigning a character string to an arrangement region, if the character string allows a return displaying (return operation) in the arrangement region, the character string may be displayed on a plurality of lines. Further, when plural items included in a display frame are the same, the same character string assignment is applied to those items, and different character string assignments are not applied thereto. Here, the different character string assignments are, for example, a character string of a schedule title of a first schedule is displayed from a right side of a character string of a start time, and a character string of a schedule title of a second schedule is displayed in a line different from a character string of a start time.

The character string display means 94 displays a character string on the display screen 8, where the character string is decided based on a size of the arrangement region and priorities of the information candidates.

The icon display means 95 displays a prepared pictogram (icon) in the arrangement region, when the character information cannot be displayed in the region decided by the arrangement region decision means 92, for example, decided by whether or not two characters are displayed in the decided region. Here, the icon is, for example, designed to a pictogram representing the contents to be displayed in the arrangement region.

The priority modification means 93 modifies priorities of the information candidates of the non-selected frames based on information of the selected frame. Specifically, for example, the priority of each information candidate of the non-selected display frames, which are the same as the information candidate to be displayed in the selected display frame, are heightened, based on the priorities modified by the priority modification means 93, when the display information decision means 5 decides a character string to be actually displayed in the arrangement region, based on a size of the arrangement region and priorities of the information candidates by the arrangement region decision means 92.

For example, when the number of schedules for the non-selected display frames is large, a large amount of information may be lost, since a sufficient arrangement region cannot be used. Therefore, to avoid the loss of a large amount of information, if titles of schedules (events) are the same as the title to be displayed in the selected display frame, the schedules are preferentially displayed, and the user can easily confirm the schedules of the non-selected display frames with reference to the schedule of the selected display frame.

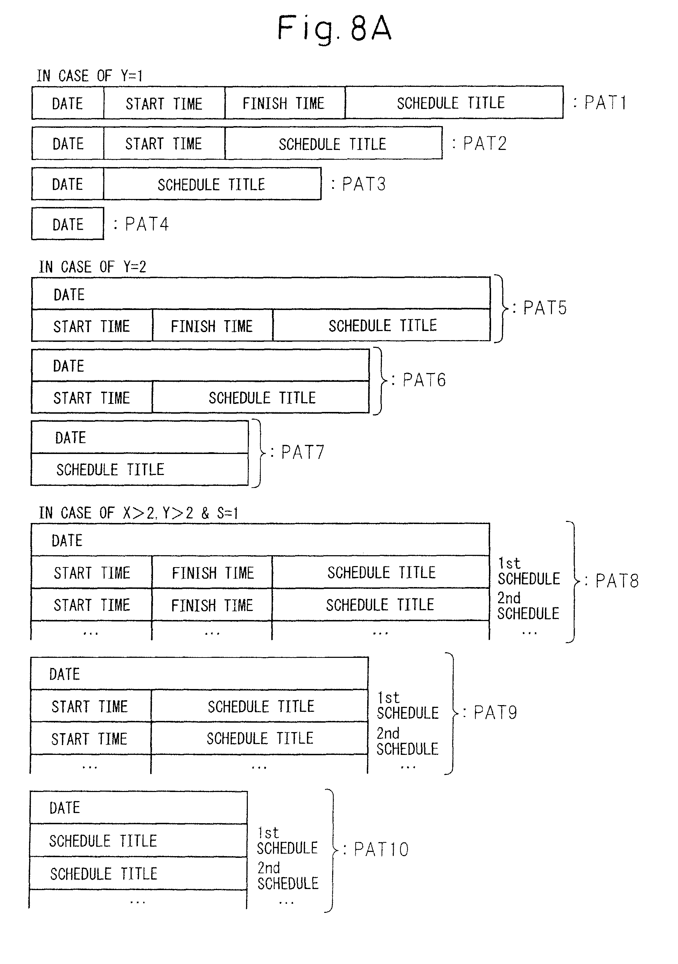

FIGS. 8A to 8D are diagrams explaining examples of region arrangement patterns in an embodiment of the information display method according to the present invention. In FIGS. 8A to 8D, a reference Y denotes a line number of characters to be longitudinally inserted in a display frame, X denotes a character number of characters to be laterally inserted in the display frame, and S denotes a line number to be assigned to each of schedules (shared line number of one schedule). Here, in FIGS. 8A to 8D, indication of icons, and the like, are omitted so as to simply explain the embodiment.

As shown in FIG. 8A, in case of Y=1 (the line number of characters to be longitudinally inserted in the display frame is one), patterns PAT1 to PAT4 will be considered. The pattern PAT1 indicates a layout where a character string having a date, a start time, a finish time and a schedule title is arranged in X characters of one line; and the pattern PAT2 indicates a layout where a character string having a date, a start time and a schedule title is arranged in X characters which is lower than that of PAT1.

Further, the pattern PAT3 indicates a layout where a character string having a date and a schedule title is arranged in X characters which is lower than that of PAT2; and the pattern PAT4 indicates a layout where a character string only having a date is arranged in X characters where a character number of the date is only arranged. Here, in pattern PAT4, an icon may be arranged on the previously arranged date.

Next, in case of Y=2, patterns PAT5 to PAT7 will be considered. The pattern PAT5 indicates a layout where a character string having a start time, a finish time and a schedule title is arranged in X characters of one line; the pattern PAT6 indicates a layout where a character string having a start time and a schedule title is arranged in X characters which is lower than that of PAT5; and the pattern PAT7 indicates a layout where a character string having all or a part of a schedule title is arranged in X characters which is lower than that of PAT6.

Further, in case of X>2, Y>2 and S=1, patterns PAT8 to PAT10 will be considered. The pattern PAT8 indicates a layout where each of character strings for all events (schedules) having a start time, a finish time and a schedule title is arranged in X characters of one line; the pattern PAT9 indicates a layout where each of character strings for all events having a start time and a schedule title is arranged in X characters which is lower than that of PAT8; and the pattern PAT10 indicates a layout where X characters thereof is lower than that of PAT9.

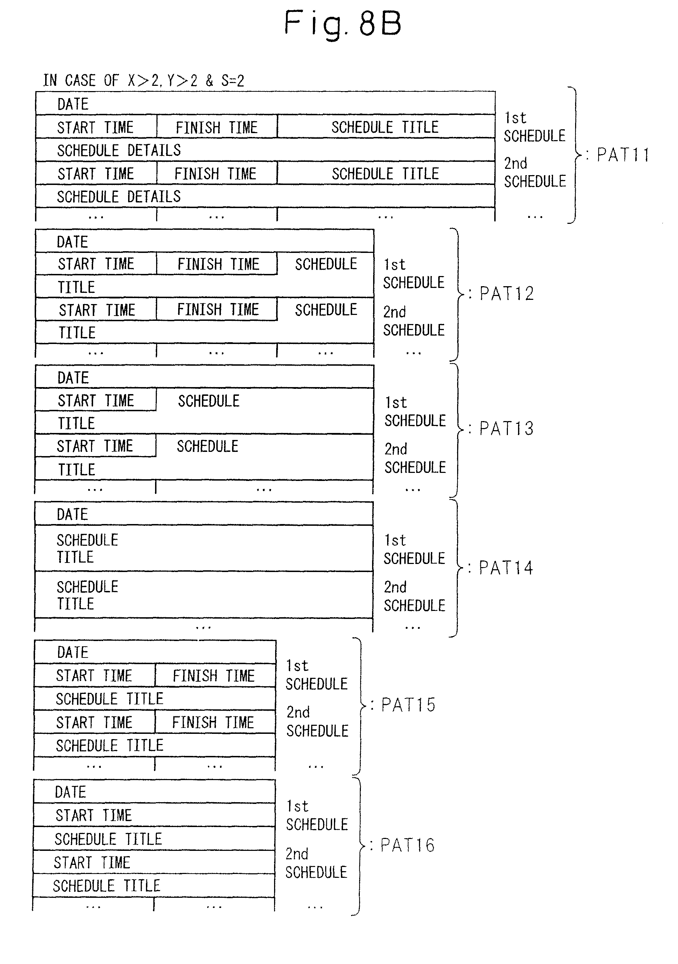

As shown in FIG. 8B, in case of X>2, Y>2 and S=2, patterns PAT11 to PAT16 will be considered.

The pattern PAT11 indicates a layout where each of character strings for all events having a start time, a finish time and a schedule title is arranged in X characters of one line; the pattern PAT12 indicates a layout where each of character strings for all events having a start time, a finish time and a schedule title is arranged in X characters $\times$ 2 (two lines), and the start time and the finish time are arranged in X characters (one line); and the pattern PAT13 indicates a layout where X characters thereof is lower than that of PAT12, each of character strings for all events having a start time and a schedule title is arranged in X characters $\times$ 2, and the start time is arranged in X characters.

The pattern PAT14 indicates a layout where X characters thereof is lower than that of PAT13, and each of character strings for all events having all or a part of a schedule title is arranged in X characters $\times$ 2; the pattern PAT15 indicates a layout where each of character strings for all events having a schedule title is arranged in X characters, and a start time and a finish time are arranged in X characters; and the pattern PAT16 indicates a layout where X characters thereof is lower than that of PAT15, each of character strings for all events having a schedule title is arranged in X characters, and a start time is arranged in X characters.

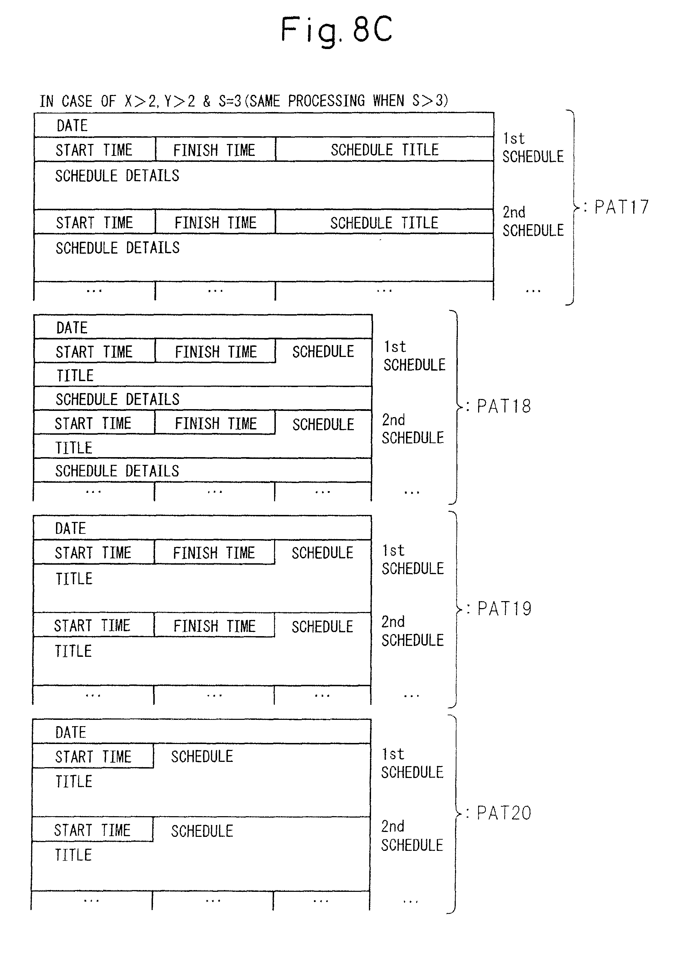

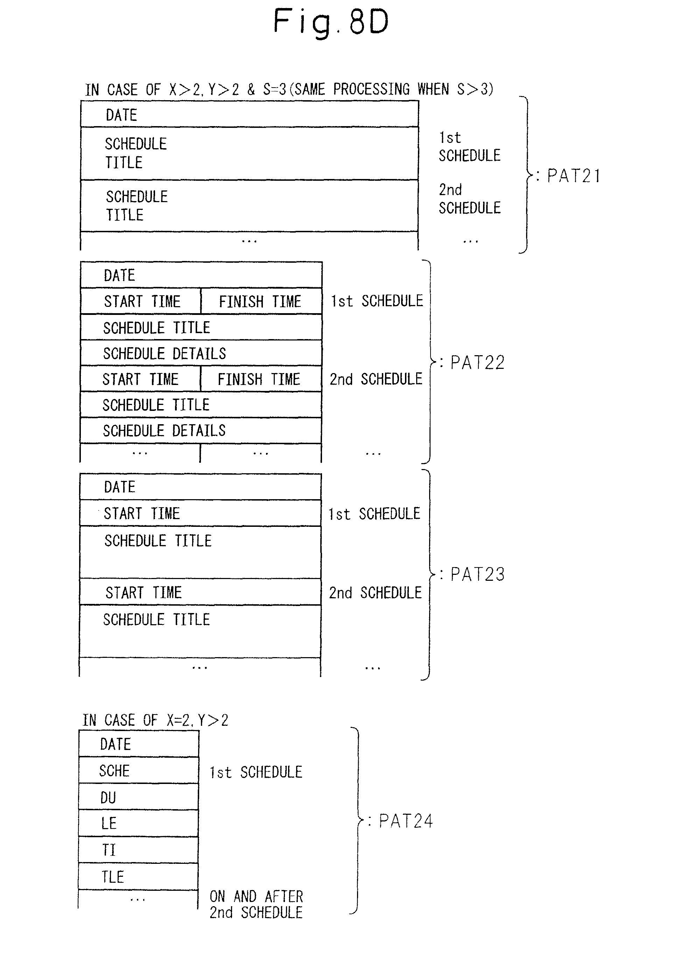

As shown in FIGS. 8C and 8D, in case of X>2, Y>2 and S=3 (the same as case of S>3), patterns PAT17 to PAT24 will be considered.

The pattern PAT17 indicates a layout where each of character strings for all events having a start time, a finish time and a schedule title is arranged in X characters of one line; and the pattern PAT18 indicates a layout where each of character strings for all events having a start time, a finish time and a schedule title is arranged in X characters $\times$ 2 (two lines), and the start time and the finish time are arranged in X characters (one line).

The pattern PAT19 indicates a layout where each of character strings for all events having a start time, a finish time and a schedule title is arranged in X characters $\times$ 3 (three lines), and the start time is arranged in X characters, and the pattern PAT20 indicates a layout where X characters thereof is lower than that of PAT19, each of character strings for all events having a start time and a schedule title is arranged in X characters $\times$ 3, and the start time is arranged in X characters.

The pattern PAT21 indicates a layout where each of character strings for all events having all or a part of a schedule title is arranged in X characters $\times$ 3, and the PAT22 indicates a layout where each of character strings for all events having a schedule title is arranged in X characters, and a start time and a finish time are arranged in X characters.

The pattern PAT23 indicates a layout where X characters thereof is lower than that of PAT22, and each of character strings for all events having a schedule title is arranged in X characters $\times$ 2, and a start time is arranged in X characters; and the pattern PAT24 indicates a layout where all or a part of a schedule title is arranged in X characters.

The layout patterns PAT1 to PAT 24 shown in FIGS. 8A to 8D are only examples, and it is of course that layout patterns can be variously modified.

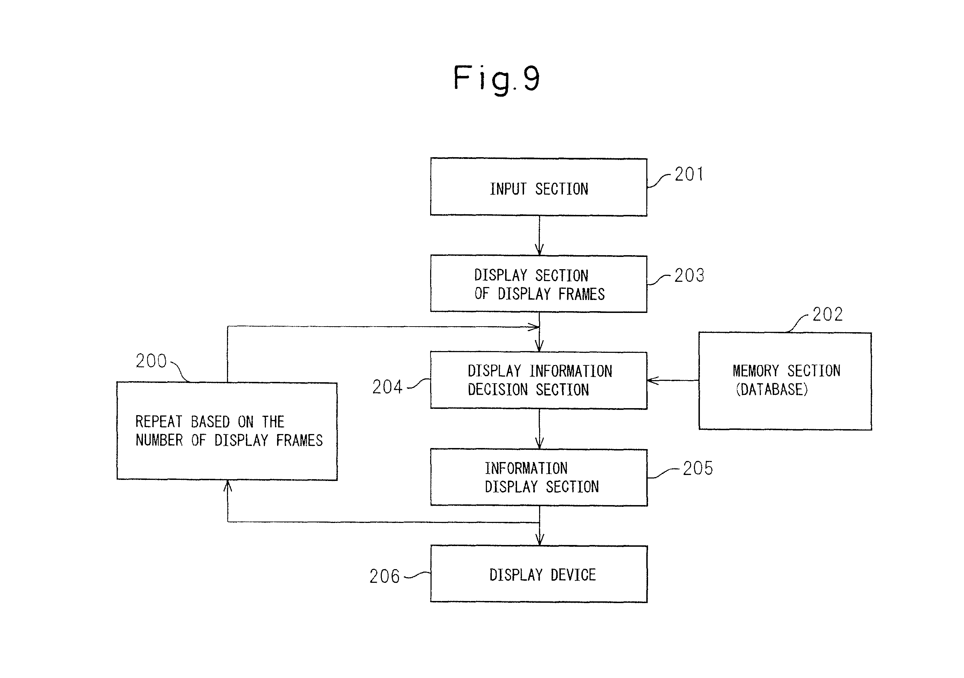

FIG. 9 is a block diagram showing an embodiment of an information display device applying an information display method according to the present invention. In FIG. 9, reference numeral 201 denotes an input section, 202 denotes a memory section (database), 203 denotes a display section of display frames, 204 denotes a display information decision section, 205 denotes an information display section, and 206 denotes a display device.

The display section of display frames 203, the display information decision section 204 and the information display section 205 constitute a display processing means for displaying a plurality of information pieces in respective display frames. The display frames are arranged in a table on a display screen of the display device 206, a selected display frame can be enlarged, and non-selected display frames are reduced according to an enlargement ratio of the enlarged display frame.

As shown in FIG. 9, the information display device comprises the input section 201, the memory section 202, the display section of display frames 203, the display information decision section 204, the information display section 205, and the display device 206.

FIG. 9 substantially indicates an information display device corresponding to that described in FIG. 3. Specifically, for example, the input section 201 receives the input information 1 including select frame information 11 and enlargement ratio information input by a user, and the memory section 202 stores defined information corresponding to information database 21 and attribute information 22. Further, the display section of display frames 203 and the display information decision section 204 shown in FIG. 9 correspond to the frame size decision means 3, character size decision means 91, information read-out means 4, arrangement region decision means 92, priority modification means 93, character string display means 94 and icon display means 95 shown in FIG. 3.

In FIG. 9, for example, select information of enlarging a display frame and enlargement ratio information are input from the input section 201, and the display section of display frames 203 displays (describes) display frames by obtaining locations, longitudinal and lateral sizes thereof. Further, the display information decision section 204 receives information from the memory section 202, divides regions in each of the display frames and decides a character string, a character size or an icon to be displayed in the display frame. The information display section 205 displays the decided display information on the display device 206.

Next, in the case of displaying a calendar having 6 lines in a longitudinal direction and 7 characters in a lateral direction of a display screen, where a longitudinal size is assumed to 320 dots and a lateral size is assumed to 240 dots, will be explained as an example.

On the display screen, upper 20 dots are used to display information, and longitudinal 300 dots and lateral 240 dots are used to display the calendar, and a left upper corner of an area (240x300) is defined to a point (0, 0) and a frame line width is defined to one dot. Further, assuming that a selected display frame is defined to a display frame at the portion of a third line from the right edge and a third line from the upper edge, and an enlargement ratio is defined to 300%.

First, in the case of FIG. 7A, processes of the display section of display frames 203 shown in FIG. 9 will be explained. Longitudinal lines of frames are calculated as follows:

```
        [{lateral 240 dots} - {(one dot of frame line
width) × (8 lines)}] ÷ {7 lines} = {33 dots of non-
    enlarged lateral size},


        {33 dots} × {enlargement ratio 300%} = {99 dots
of lateral size of selected display frame}, and


        [{lateral 240 dots} - {(one dot of frame line
width) × (8 lines)} - {99 dots}] ÷ {6 lines of non-
    selected display frames} = {22 dots of lateral size of
non-selected display frame}.
```

In this case, 22 dots are 6 pieces, 99 dots are one piece, one dot is 8 pieces, and thus the total is 239 dots and one dot is blank. Therefore, one dot is added to the selected display frame, so that the lateral size of the selected display frame becomes 100 dots.

Specifically, display frames are described on the display screen by 8 vertical lines of (0, 0)-(0, 299), (23, 0)-(23, 299), (46, 0)-(46, 299), (147, 0)-(147, 299), (170, 0)-(170, 299), (193, 0)-(193, 299), (216, 0) - (216, 299), and (239, 0)-(239, 299).

Next, in the case of FIG. 7B, processes of the display section of display frames 203 shown in FIG. 9 will be explained. A selected display frame has an enlargement ratio of 300%, and non-selected display frames close to the selected display frame have an enlargement ratio of 30%. Longitudinal lines of frames are calculated as follows:

```
      [{lateral 240 dots} - {(one dot of frame line
width) × (8 lines)}] ÷ {7 lines} = {33 dots of non-
   enlarged lateral size},


      {33 dots} × {enlargement ratio 300%} = {99 dots
 of lateral size of selected display frame},


      {99 dots} × {30%} = {29 dots of lateral size of
 non-selected display frame close to selected display
 frame}, and


      [{lateral 240 dots} - {(one dot of frame line
width) × (8 lines)} - {99 dots} - {(29 dots) × (2 lines)}]
 ÷ {4 lines of non-selected display frames} = {18 dots of
 lateral size of non-selected display frame}.
```

In this case, 18 dots are 4 pieces, 99 dots are one piece, 29 dots are two pieces, one dot is 8 pieces, and thus the total is 237 dots and three dots are blank. Therefore, three dots are added to the selected display frame, so that the lateral size of the selected display frame becomes 102 dots.

Specifically, display frames are described on the display screen by 8 vertical lines of (0, 0)-(0, 299), (19, 0)-(19, 299), (49, 0)-(49, 299), (152, 0)-(152, 299), (182, 0)-(182, 299), (201, 0)-(201, 299), (220, 0) - (220, 299), and (239, 0) - (239, 299).

Further, return back to FIG. 7A, lateral lines of frames are calculated as follows:

```
      [{longitudinal 300 dots} - {(one dot of frame
line width) × (7 lines)}] ÷ {6 lines} = {48 dots of non-
 enlarged longitudinal size},


      {48 dots} × {enlargement ratio 300%} = {144
dots of longitudinal size of selected display frame}, and


      [{longitudinal 300 dots} - {(one dot of frame
line width) × (7 lines)} - {144 dots}] ÷ {5 lines of non-
selected display frames} = {29 dots of longitudinal size
of non-selected display frame}.
```

In this case, 29 dots are 5 pieces, 144 dots are one piece, one dot is 7 pieces, and thus the total is 296 dots and four dots are blank. Therefore, four dots are added to the selected display frame, so that the longitudinal size of the selected display frame becomes 148 dots.

Specifically, display frames are described on the display screen by 7 horizontal lines of (0, 0)-(239, 0), (0, 30)-(239, 30), (0, 60)-(239, 60), (0, 209)-(239, 209), (0, 239)-(239, 239), (0, 269)-(239, 269), and (0, 299)-(239, 299).

Further, in the case of FIG. 7B, a selected display frame has an enlargement ratio of 300%, and non-selected display frames close to the selected display frame have an enlargement ratio of 30%, and lateral lines of frames are calculated as follows:

$$[\{longitudinal\ 300\ dots\} - \{(one\ dot\ of\ frame\ line\ width) \times (7\ lines)\}] \div \{6\ lines\} = \{48\ dots\ of\ non\text{-}enlarged\ longitudinal\ size\},$$

$$\{48\ dots\} \times \{enlargement\ ratio\ 300\%\} = \{144\ dots\ of\ longitudinal\ size\ of\ selected\ display\ frame\},$$

$$\{144\ dots\} \times \{30\%\} = \{43\ dots\ of\ longitudinal\ size\ of\ non\text{-}selected\ display\ frame\ close\ to\ selected\ display\ frame\},\ and$$

$$[\{longitudinal\ 300\ dots\} - \{(one\ dot\ of\ frame\ line\ width) \times (7\ lines)\} - \{144\ dots\} - \{(43\ dots) \times (2\ lines)\}] \div \{3\ lines\ of\ non\text{-}selected\ display\ frames\} = \{21\ dots\ of\ longitudinal\ size\ of\ non\text{-}selected\ display\ frame\}.$$

Specifically, display frames are described on the display screen by 7 horizontal lines of (0, 0)-(239, 0), (0, 22)-(239, 22), (0, 66)-(239, 66), (0, 211)-(239, 211), (0, 255)-(239, 255), (0, 277)-(239, 277), and (0, 299)-(239, 299).

Therefore, 42 squares are provided by dividing with the longitudinal lines and the lateral lines, and each of 42 squares constitutes a display frame, respectively.

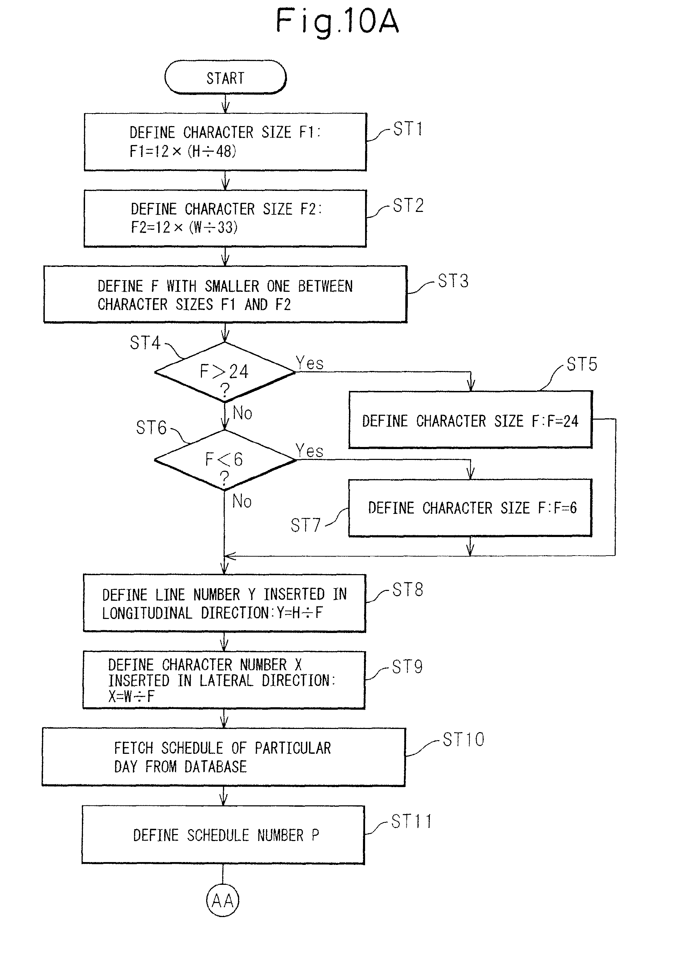

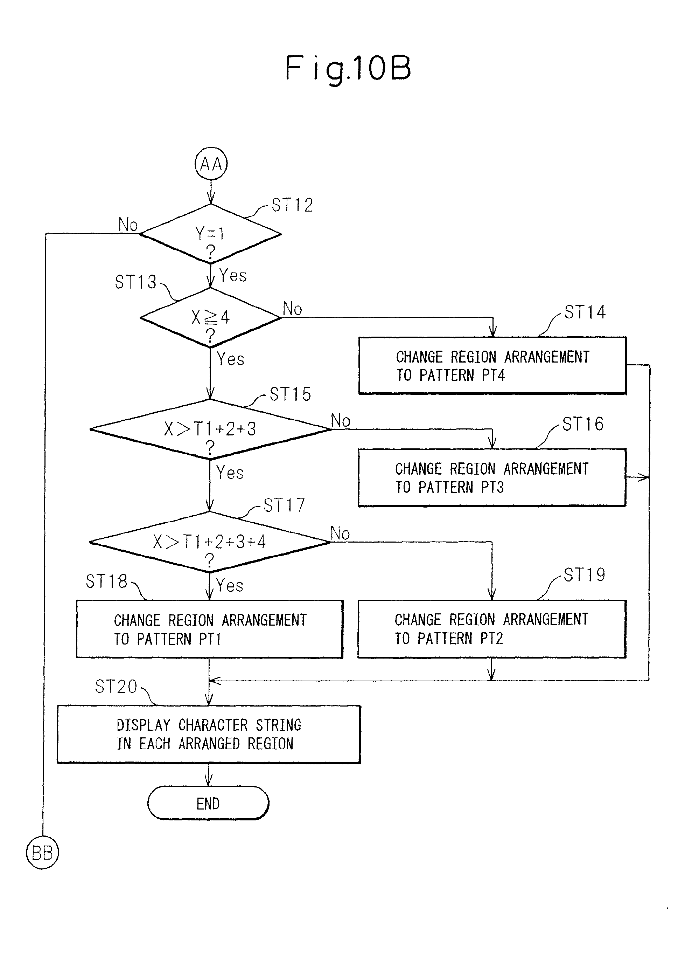

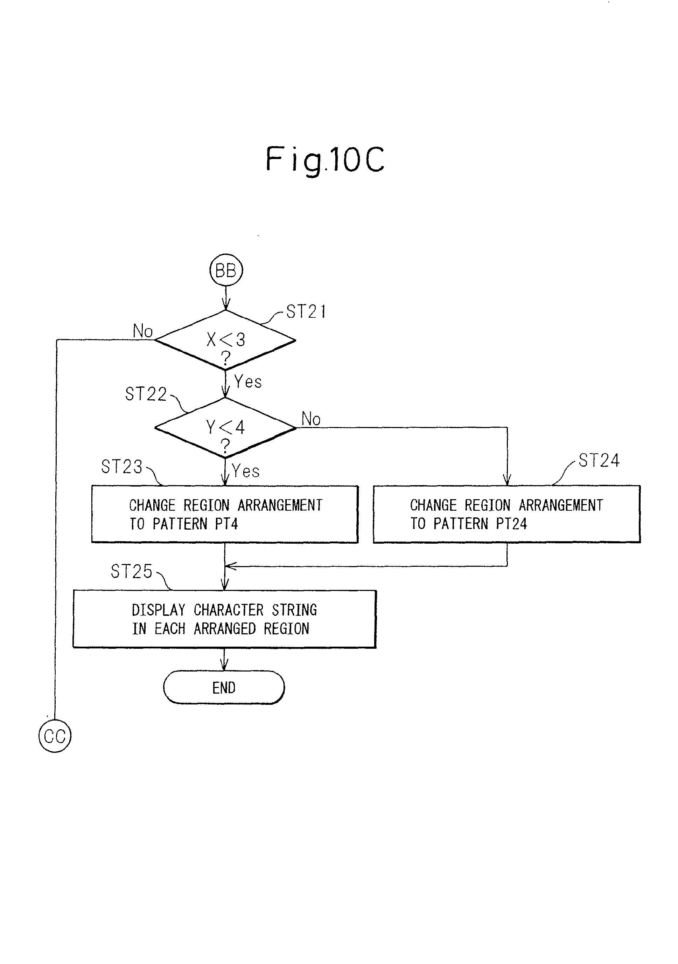

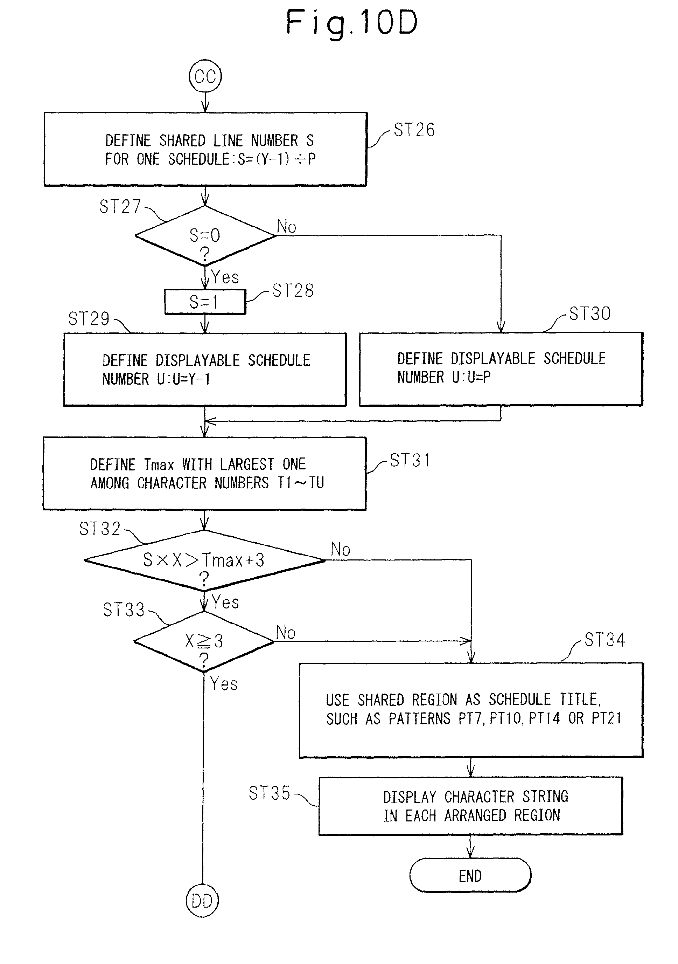

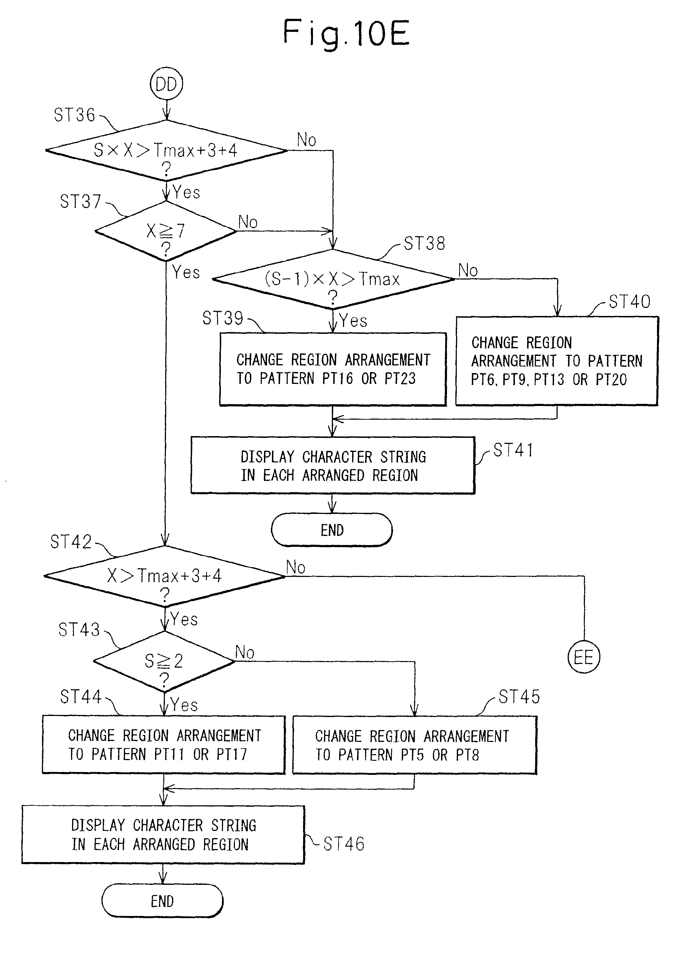

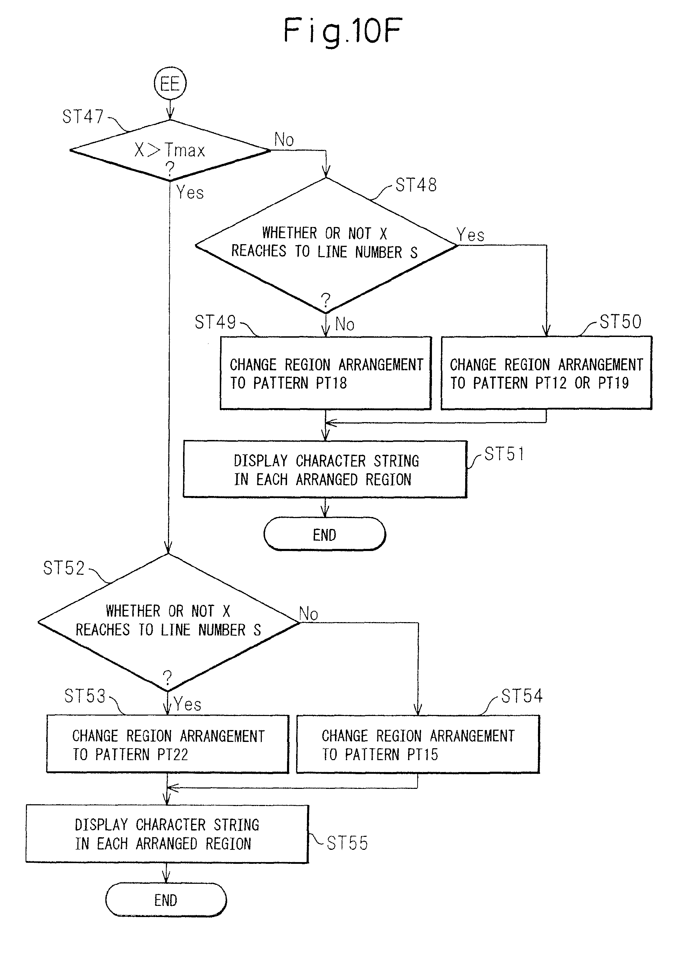

FIGS. 10A to 10F indicate a flowchart explaining an operation of an embodiment of the information display method according to the present invention. Note that the flowchart shown in FIGS. 10A to 10F relates to one display frame, and therefore, when 42 (7x6) display frames are displayed on the display screen, the operation is repeatedly carried out by 42 times. Further, in the explanation of the flowchart shown in FIGS. 10A to 10F, with reference to the character size, the case where N is assumed to 4 (lines), the maximum character size is assumed to 24 dots and the minimum size is assumed to 6 dots will be described, but these values can be variously modified.

In this embodiment, the non-enlarged character size is obtained by 48 dots ö 4 = 12 dots. Further, in this embodiment, the date is formed by fixed two characters, the start time is formed by fixed three characters, the finish time is formed by fixed four characters, the schedule is formed by T characters, and the schedule details are formed by Q characters. Here, values of T and Q are changed base on contents of the display information, and the T and Q characters are registered in the information database. Further, in the flowchart, W denotes a lateral size of the display frame, and H denotes a longitudinal size of the display frame.

First, an information display program starts, in step ST1, a character size $F_1$ is determined to multiply a non-enlarged character size ({longitudinal size (H) of display frame} $\times$ {longitudinal size (48) of non-enlarged display frame}) by specific times (12 times), further in step ST2, a character size $F_2$ is determined to multiply non-enlarged character size ({lateral size (W) of display frame} $\times$ {lateral size (33) of non-enlarged display frame}) by specific times (12 times), and the flow proceeds to step ST3.

In step ST3, a character size F is set to smaller one of the character sizes $F_1$ and $F_2$, and the flow proceed to step ST4. In Step ST4, it is discriminated whether or not the character size F is larger than the maximum character size (24), if it is discriminated that the character size F is larger than the maximum character size (F>24), the flow proceeds to step ST5, the character size F is set to the maximum character size (F=24), and then the flow proceeds to step ST8.

In Step ST4, if it is discriminated that the character size F is not larger than the maximum character size, the flow proceeds to step ST6, and it is discriminated whether or not the character size F is smaller than the minimum character size (6). In step ST6, if it is discriminated that the character size F is smaller than the minimum character size (F<6), the flow proceeds to step ST7, the character size F is set to the minimum character size (F=6), and then the flow proceeds to step ST8. On the other hand, if it is discriminated that the character size F is not smaller than the minimum character size, the flow directly proceeds to step ST8.

In step ST8, a line number (Y) of the character size F inserted in the longitudinal direction of the display frame is calculated by {line number (Y)} = {longitudinal size (H) of display frame} ö {character size (F)}, and in step ST9, a character number (X) of the character size F inserted in the lateral direction of the display frame is calculated by {character number (X)} = {lateral size (W) of display frame} ö {character size (F)}. Then, the flow proceeds to step ST10.

In step ST10, schedules (all information candidates) of a particular day are fetched (read out) from the information database, and then the flow proceeds to step ST11. In step ST11, a number of the schedules of the particular day is set to P, and in step ST12, it is discriminated whether or not the line number Y is "1".

In step ST12, if it is discriminated that the line number Y is "1", the flow proceeds to step ST13, and in the other cases, the flow proceeds to step ST21. In step ST13, it is discriminated whether or not the character number X is equal to or larger than "4" characters, if it is discriminated that the character number X is equal to or larger than "4" (X≥4), the flow proceeds to step ST15, and in the other cases, the flow proceeds to step ST14. Here, in step ST13, the case of discriminating that the character number X is not equal to or larger than "4" characters is the case where the schedule title cannot be displayed.

In step ST14, a layout (region arrangement of a pattern PT4) having a date and an icon is determined to display in the display frame, and then the flow proceeds to step ST20. In step ST15, it is discriminated whether or not the character number X is larger than the total of a title character number T1, a date character number "2" and a start time character number "3" of a first schedule, if it is discriminated that the character number X is larger than the total of the title character number, the date character number and the start time character number (X>T1+2+3) of the first schedule, the flow proceeds to step ST17, and in the other cases, the flow proceeds to step ST16.

In step ST16, a layout (region arrangement of a pattern PT3) having a date and a schedule title arranged in a lateral direction is determined to display in the display frame, and then the flow proceeds to step ST20. In step ST17, it is discriminated whether or not the character number X is larger than the total of the title character number T1, the date character number "2", the start time character number "3" and a finish time character number "4" of the first schedule, if it is discriminated that the character number X is larger than the total of the title character number, the date character number, the start time character number and the finish time character number (X>T1+2+3+4) of the first schedule, the flow proceeds to step ST18, and in the other cases, the flow proceeds to step ST19.

In steps ST15 and ST17, T1 denotes the title character number, "2" denotes the date character number, "3" denotes the start time character number, and "4" denotes the finish time character number of the first schedule.

In step ST18, a layout (region arrangement of a pattern PT1) having a date, a start time, a finish time and a schedule title arranged in a lateral direction is determined to display in the display frame, and then the flow proceeds to step ST20. In step ST19, a layout (region arrangement of a pattern PT2) having a date, a start time and a schedule title arranged in a lateral direction is determined to display in the display frame, and then the flow proceeds to step ST20. In step ST20, a character string is displayed in the arrangement region based on the decided layout, and the flow comes to an end.

Next, in step ST21, it is discriminated whether or not the character number X is smaller than character number "3", if it is discriminated that the character number X is smaller than character number "3" (x<3), the flow proceeds to step ST22, and in the other cases, the flow proceeds to step ST26. In step ST22, it is discriminated whether or not the line number Y is equal or larger than character number "4", if it is discriminated that the line number Y is smaller than line number "4" (y<4), the flow proceeds to step ST23, and in the other cases, the flow proceeds to step ST24. Here, in step ST22, the case of discriminating that the line number Y is smaller than "4" lines is the case where the schedule cannot be displayed in the display frame, since a lateral width thereof is too short.

In step ST23, a layout (region arrangement of a pattern PT4) having a date and an icon is determined to display in the display frame, and then the flow proceeds to step ST25. In step ST24, a layout (region arrangement of a pattern PT24) having a date and a schedule title arranged in a longitudinal direction is determined to display in the display frame, and then the flow proceeds to step ST25. In step ST25, a character string is displayed in the arrangement region based on the decided layout, and the flow comes to an end.

Further, in step ST26, a line number to be shared for one schedule (S: shared line number of schedule) is calculated by the line number (Y-1) ö schedule number (P), and then the flow proceeds to step ST27. In step ST27, it is discriminated whether or not the shared line number of the schedule is equal to "0", if it is discriminated that the shared line number of the schedule is equal to "0" (S=0), the flow proceeds to step ST28. In step ST28, the shared line number of the schedule is defined to "1" (S=1) for each schedule, and then the flow proceeds to step ST29.

In step ST27, if it is discriminated that the shared line number of the schedule is not equal to "0", the flow proceeds to step ST30. In step ST30, an objective (displayable) schedule number (U) is defined to "P", and then the flow proceeds to step ST31. Further, in step ST29, since all schedules cannot be displayed, the other schedules except for the objective schedules are not displayed, the objective schedule number (U) is defined to "Y-1", which is obtained by the line number Y - date display line "1", and then the flow proceeds to step ST31.

In step ST31, the largest character number in title character numbers (Tl to TU) from a first schedule to a U-th schedule is defined to $T_{max}$, and then the flow proceeds to step ST32. Here, the title character numbers T1 to TU in step ST31 indicate schedule titles of the first to U-th schedules.

In step ST32, it is discriminated whether or not the total character number of the largest title character number $T_{max}$ and the start time character number is included within a character number of $S \times X$, if it is discriminated that the total character number of the largest title character number $T_{max}$ and the start time character number (3) is included within the character number $S \times X$ ($S \times X > T_{max}$), the flow proceeds to step ST33, and in the other cases, the flow proceeds to step ST34.

In step ST33, it is discriminated whether or not that the character number X is equal to or larger than the start time character number, if it is discriminated that the character number X is equal to or larger than the start time character number ($X \geq 3$), the flow proceeds to step ST36, and in the other cases, the flow proceeds to step ST34.

In step ST34, layouts (arrangement regions of patterns PT7, PT10, PT14 and PT21) each having a character string located below a date line is determined to display in the display frame, and then the flow proceeds to step ST35. In step ST35, the character strings are displayed in the arrangement regions based on the decided layouts, and the flow comes to an end.

Next, in step ST36, it is discriminated whether or not the total character number of the largest title character number $T_{max}$, the start time character number and the finish time character number is included within a character number of $S \times X$, if it is discriminated that the total character number of the largest title character number $T_{max}$, the start time character number and the finish time character number is included within the character number of $S \times X$ ($S \times X > T_{max} + 3 + 4$), the flow proceeds to step ST37, and in the other cases, the flow proceeds to step ST38.

In step ST37, it is discriminated whether or not the character number X is equal to or larger than a total character number of the start time character number and the finish time character number, if it is discriminated that the character number X is equal to or larger than the total character number of the start time character number and the finish time character number ($X \geq 7$), the flow proceeds to step ST42, and in the other cases, the flow proceeds to step ST38.

In step ST38, it is discriminated whether or not the largest title character number $T_{max}$ is included within the character number $(S-1) \times X$, if it is discriminated that the largest title character number $T_{max}$ is included within the character number $(S-1) \times X$ ($(S-1) \times X > T_{max}$), the flow proceeds to step ST39, and in the other cases, the flow proceeds to step ST40.

In step ST39, a layout (region arrangement of patterns PT16 and PT23) having U groups of schedules each including a start time of one line and a schedule title in longitudinal direction is determined to display in the display frame, and then the flow proceeds to step ST41. In step ST40, a layout (region arrangement of patterns PT6, PT9, PT13 and PT20) having U groups of schedules each including a start time and a schedule title in lateral direction is determined to display in the display frame, and then the flow proceeds to step ST41. In step ST41, a character string is displayed in the arrangement region based on the decided layout, and the flow comes to an end.

Next, in step ST42, it is discriminated whether or not a total character number of the largest title character number $T_{max}$, the start time character number and the finish time character number is included within a character number X of one line, if it is discriminated that the total character number of the largest title character number $T_{max}$, the start time character number and the finish time character number is included within a character number X of one line ($X > T_{max} + 3 + 4$), the flow proceeds to step ST43, and in the other cases, the flow proceeds to step ST47.

In step ST43, it is discriminated whether or not the line number S is equal to or larger than 2, if it is discriminated that the line number S is equal to or larger than 2, the flow proceeds to step ST44, and in the other cases, the flow proceeds to step ST45.

In step ST44, a layout (region arrangement of patterns PT11 and PT17) having U groups of schedules each including a start time, a finish time and a schedule title in longitudinal direction and below the date line, and schedule details in the other rest lines is determined to display in the display frame, and then the flow proceeds to step ST46. In step ST45, a layout (region arrangement of patterns PT5 and PT8) having U groups of schedules each including a start time, a finish time and a schedule title in lateral direction and below the date line, and schedule details in the other rest lines is determined to display in the display frame, and then the flow proceeds to step ST46. In step ST46, a character string is displayed in the arrangement region based on the decided layout, and the flow comes to an end.

In step ST47, it is discriminated whether or not the largest title character number $T_{max}$ is included within a character number X of a lateral one line, if it is discriminated that the largest title character number $T_{max}$ is included within the character number X, the flow proceeds to step ST52, and in the other cases, the flow proceeds to step ST48.

In step ST48, it is discriminated whether or not at least one space line exists after displaying the total of the start time, the finish time and the schedule title in the display frame within the character number sxx, if it is discriminated that at least one space line exists after displaying the total of the start time, the finish time and the schedule title in the display frame within the character number S×X (does not reach to S line), the flow proceeds to step ST49, and in the other cases, the flow proceeds to step ST50.

In step ST49, a layout (region arrangement of a pattern PT18) having U groups of schedules each including a start time, a finish time and a schedule title in longitudinal direction and below the date line, and schedule details in the space lines is determined to display in the display frame, and then the flow proceeds to step ST51. In step ST50, a layout (region arrangement of patterns PT12 and PT19) having U groups of schedules each including a start time, a finish time and a schedule title in lateral direction and below the date line, and schedule details in the other rest lines is determined to display in the display frame, and then the flow proceeds to step ST51. In step ST51, a character string is displayed in the arrangement region based on the decided layout, and the flow comes to an end.

In step ST52, it is discriminated whether or not the line number S is equal to or larger than 3, if it is discriminated that the line number S is equal to or larger than 3 (reached to S line), the flow proceeds to step ST53, and in the other cases, the flow proceeds to step ST54.

In step ST53, a layout (region arrangement of a pattern PT18) having U groups of schedules each including a start time a finish time by one line, a schedule title by the next one line and below the date line, and schedule details in the following lines are determined to display in the display frame, and then the flow proceeds to step ST55. In step ST54, a layout (region arrangement of a pattern PT15) having U groups of schedules each including a start time and a finish time by one line, and a schedule title by the next one line is determined to display in the display frame, and then the flow proceeds to step ST55. In step ST55, a character string is displayed in the arrangement region based on the decided layout, and the flow comes to an end.

In the above descriptions, in one or plurality of schedules to be displayed in display frames which are not selected by the user (non-selected display frames), a priority of a character string having an item which is the same as that included in a display frame which is selected by the user (selected display frame) is assigned to a higher priority. In order to realize this process, display information for the selected display frame is necessary, and therefore, the above flow for the selected display frame is carried out in first, and then the flow for each of the non-selected display frames may be carried out.

In the flow for the selected display frame, a step of storing a schedule title may be added to the objective schedule decided in step ST29 or ST30; and in the flow for each of the non-selected display frames, a step of rearranging a schedule title, which is the same as that of the selected display frame, may be added, after the schedule is read out from the database in step ST10. In this case, various manners, which are generally used, can be applied for comparing character strings and sorting arrangements of the character strings to be displayed in the display frame.

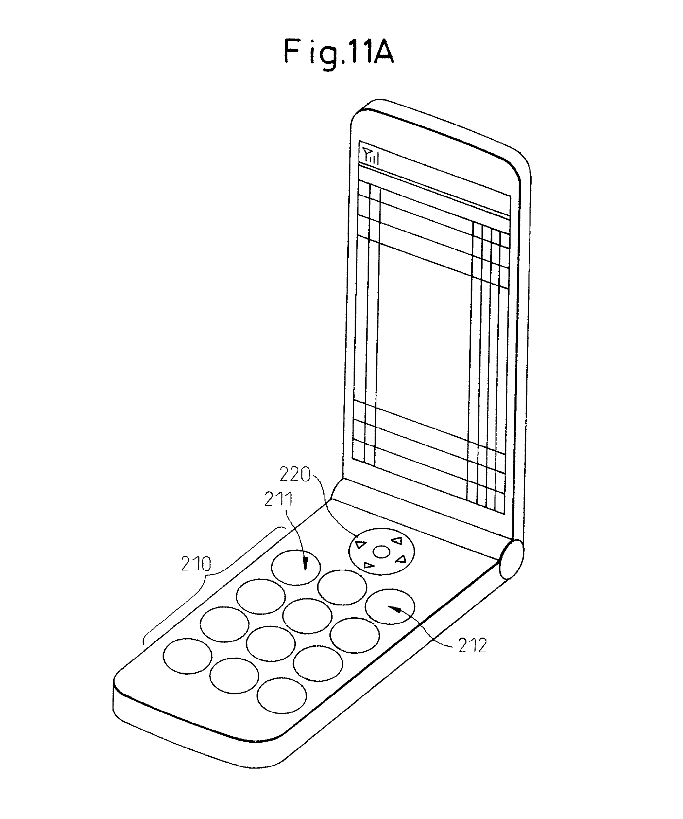

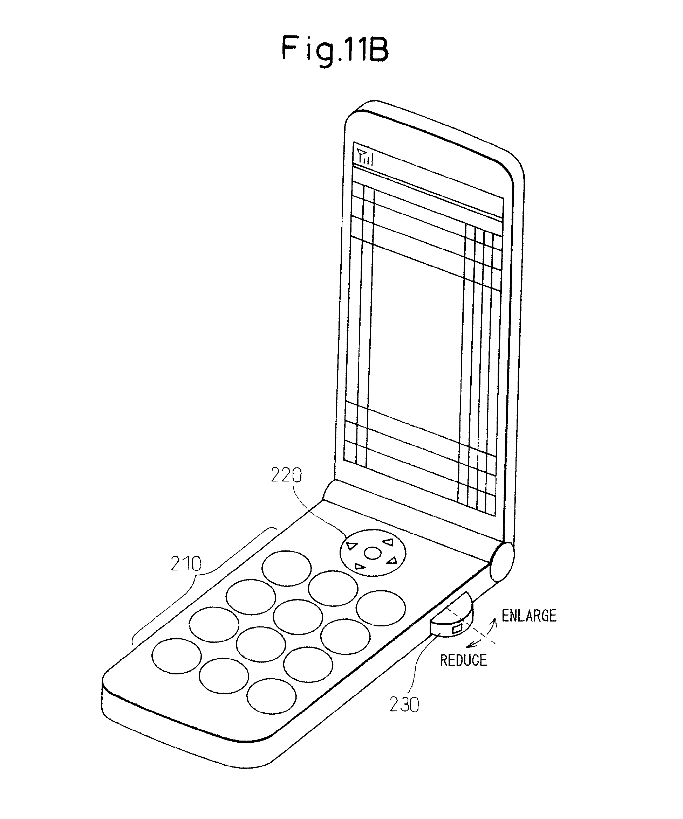

FIGS. 11A and 11B are perspective views showing examples of a mobile phone applying the information display method according to the present invention.

First, in the mobile phone shown in FIG. 11A, for example, the user selects a display frame of an optional date to be enlarged by using a direction select key 220, and controls an enlarge operation or a reduce operation of the selected display frame by using predetermined keys 211 or 212 of a numeric key portion 210. The selected display frame is stepwise controlled (for example, eight steps) by pushing the enlarge operation and reduce operation keys 211 and 212 to enlarge or reduce the display frame size.

Further, in the mobile phone shown in FIG. 11B, for example, the user selects a display frame of an optional date to be enlarged by using a direction select key 220, and controls an enlarge operation and a reduce operation of the selected display frame by using an enlarge/reduce lever 230 employed at one side of the mobile phone body. Here, the selected display frame is continuously controlled by using the enlarge/reduce lever 230 to enlarge or reduce the display frame size.

Note that the mobile phones shown in FIGS. 11A and 11B are only examples, and therefore the present invention is not limited to a mobile phone.

As described above, according to the present invention, it is possible to provided a layout where a user can easily confirm the contents of information displayed in a display frame having a specific size by using a preferable character size. Further, according to the present invention, by comparing the prior art information display method, amount of information to be displayed in the display frame can be increased and the user can easily refer the information which is displayed by applying a metaphor, since a necessary part of the displayed contents can be enlarged without including information loss which may be caused by the prior art information display method.

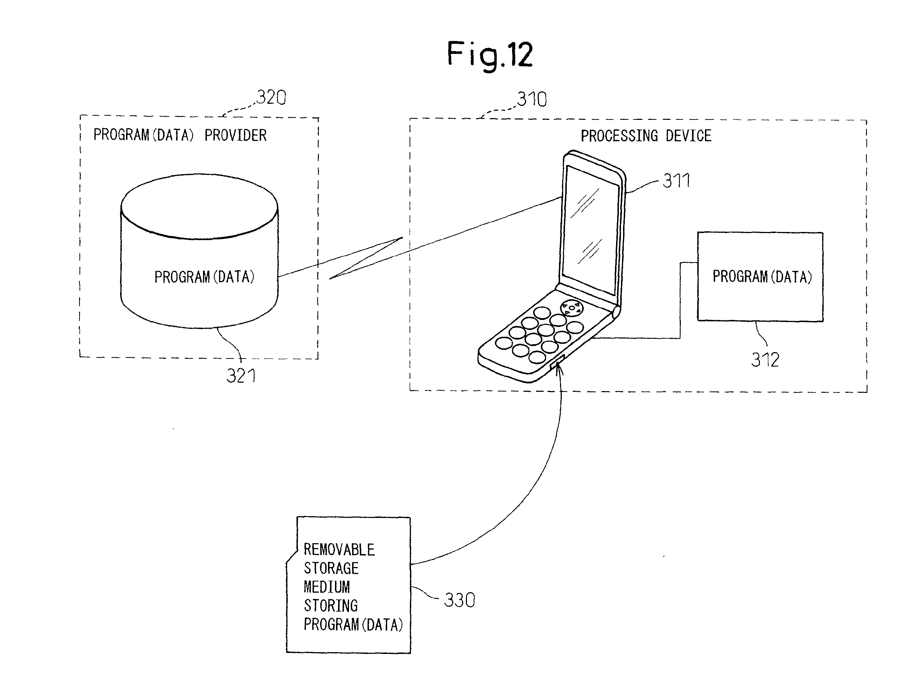

FIG. 12 is a perspective view showing an example of a mobile phone applying the information display method according to the present invention. In FIG. 12, reference numeral 310 denotes a processing apparatus, 320 denotes a program (data) provider, and 330 denotes a portable recording medium. In FIG. 12, the processing apparatus is described as a mobile phone, however, as described above, it is of course that the present invention is not limited to apply the mobile phone.

The present invention is provided, for example, in the form of a program (data) for the processing apparatus 310 such as shown in FIG. 12, and the program is executed on the processing apparatus 310. The processing apparatus 310 comprises an arithmetic processing unit 311, which includes a processor, and a processing apparatus local memory (for example, a RAM (Random Access Memory) and a hard disk) 312, which provides a program (data) to the arithmetic processing unit 311 or stores the results of the processing. The program (data) provided to the processing apparatus 310 is loaded and executed on the main memory of the processing apparatus 310.

The program provider 320 has a program storing means (a remote memory, for example, a DASD (Direct Access Storage Device)) 321 and provides the program to the processing apparatus 310 via a line such as the Internet, or provides the program to the processing apparatus 310 by means of the portable recording medium 330 which is, for example, a memory card such as a Mini-SD or a Micro-SD, an optical disk such as a CD-ROM or a DVD, or a magnetic disk such as a floppy disk. It will be appreciated that the medium on which the information display program according to the present invention is recorded includes various kinds of media, such as the processing apparatus local memory 312, the remote memory 321, and the portable recording medium 330.

INDUSTRIAL APPLICABILITY

An information display device, an information display method and an information display program according to the present invention can be widely applied to portable terminals, such as mobile phones or PDAs having a function of displaying information in a frame of which longitudinal and lateral directions are changeable within a display screen, and further applied to an apparatus having an information display means to display various kinds of information, for example, a computer or an electronic paper.

**Claims**

1. An information display method of displaying a plurality of display frames arranged in a table on a display screen, each of the display frames enabling display of a plurality of information pieces, and a selected display frame being enlargeable, while non-selected display frames are reduced according to an enlargement ratio of the enlarged display frame, wherein:

   each of information candidates to be displayed in respective display frames includes an attribute of a display priority and an attribute of a display character size; and
   an information display operation is carried out, based on a size of each of the display frames, by deciding the display priority and the display character size of each of the information candidates to be displayed in the respective display frames.

2. The information display method as claimed in claim 1, wherein:

   the attribute of the display character size in each of the display frames is determined to an optimum size with reference to a longitudinal size and a lateral size of the display frame;
   a minimum value of the attribute of the display character size is determined to a minimum size enabling to read out information content candidates when the information candidates are displayed on the display screen; and
   a maximum value of the attribute of the display character size is converted from a maximum size to easily read out information content candidates when the information candidates are displayed on the display screen.

3. The information display method as claimed in claim 1, wherein:

   each of the information candidates to be displayed in the respective display frames further includes an attribute of return displaying existence; and
   the information display operation is carried out, based on the size of each of the display frames, by deciding the display priority, the display character size and the return displaying existence of each of the information candidates to be displayed in the respective display frames.

4. The information display method as claimed in claim 3, wherein:

   the attribute of the return displaying existence of each of the information candidates to be displayed in the respective display frames is determined to an improper attribute of the return displaying existence when the information candidate is one word, and is determined to a proper attribute of the return displaying existence when the information candidate is a sentence; and when the information candidate includes a plurality of same items, attributes of the same items are unified to the same attribute.

**5.** The information display method as claimed in claim 3, wherein:

the attribute of the priority decides whether or not to display a character string of the information candidate, and decides an order of the character string to be displayed in the display frame;
the attribute of the display character size decides a maximum value and a minimum value of the display character size to be displayed in the display frame; and
the attribute of the return displaying existence decides whether or not the character string is displayed in the display frame by return displaying.

**6.** The information display method as claimed in any one of claims 1 to 5, wherein:

an enlargement operation of the selected display frame and a reduction operation of the non-selected display frames are continuously or stepwise carried out.

**7.** The information display method as claimed in any one of claims 1 to 6, wherein the information display operation is carried out by:

lateral sizes of display frames located on an upper or lower side of the selected display frame in the non-selected display frames are longer than those of display frames which are not located on the upper or lower side of the selected display frame in the non-selected display frames; and
longitudinal sizes of display frames located on a left or right side of the selected display frame in the non-selected display frames are longer than those of display frames which are not located on the left or right side of the selected display frame in the non-selected display frames.

**8.** The information display method as claimed in claim 7, wherein the information display operation is carried out by further:

longitudinal sizes of display frames located on the upper or lower side of the selected display frame in the non-selected display frames are longer than those of display frames which are not located on the upper or lower side of the selected display frame in the non-selected display frames; and
lateral sizes of display frames located on the left or right side of the selected display frame in the non-selected display frames are longer than those of display frames which are not located on the left or right side of the selected display frame in the non-selected display frames.

**9.** The information display method as claimed in any one of claims 1 to 8, wherein:

the plurality of display frames displayed on the display screen indicate about one calendar month, and an information candidate to be displayed in each of the display frames includes each day's schedule; and
the information candidate to be displayed in each of the display frames includes one or a plurality of groups of schedules each including at least one of the date, schedule title, start time, finish time and details of the schedule.

**10.** The information display method as claimed in claim 9, wherein:

each of the display frames includes a divided region for displaying the date, and a divided region for displaying contents of the schedule;
numbers of characters included in the longitudinal and lateral directions of each of the display frames are calculated based on the decided display character size; and
the information candidate to be displayed in each of the display frames is displayed in the divided region for displaying the contents of the schedule.

**11.** The information display method as claimed in claim 9 or 10, wherein:

priorities included in each information candidate to be displayed in each of the display frames are determined such that a first priority is a schedule title, a second priority is a start time, and a third priority is a finish time.

**12.** The information display method as claimed in claim 9 or 10, wherein:

priorities included in each information candidate to be displayed in each of the display frames are determined such that, when a plurality of schedules are to be displayed in the display frame, a schedule having the maximum number is firstly displayed, and then the other schedules are sequentially displayed.

**13.** The information display method as claimed in any one of claims 1 to 12, wherein:

the display character size is a scalable font.

**14.** The information display method as claimed in any one of claims 1 to 13, wherein:

an icon, which is shown as a pictogram briefly representing the information content candidate, is displayed in the display frame, when the display frame is reduced to a state where a character string including at least two characters of a minimum character size is not displayed in the reduced display frame.

**15.** The information display method as claimed in any one of claims 1 to 14, wherein:

a schedule to be displayed in each of the non-selected display frames including a schedule title which is the same schedule title of a schedule to be displayed in the selected display frame is assigned to a higher priority.

**16.** The information display method as claimed in any one of claims 1 to 15, wherein:

a minimum size of the display frame is determined to a size where a character string of the most priority information candidate is displayed by a minimum character size.

**17.** An information display device comprising a display device for displaying a plurality of display frames arranged in a table on a display screen, and a display processing unit configured to display a plurality of information pieces in each of the display frames, enabling enlargement of a selected display frame, and reduction of non-selected display frames according to an enlargement ratio of the enlarged display frame, wherein:

each information candidate to be displayed in respective display frames includes an attribute of a display priority and an attribute of a display character size; and
the display processing unit carries out an information display operation, based on the size of each of the display frames, by deciding the display priority and the display character size of each of the information candidates to be displayed in the respective display frames.

**18.** The information display device as claimed in claim 17, wherein:

each of the information candidates to be displayed in the respective display frames further includes an attribute of return displaying existence; and
the display processing unit carries out the information display operation, based on the size of each of the display frames, by deciding the display priority, the display character size and the return displaying existence of each of the information candidates to be displayed in the respective display frames.

**19.** An information display program of displaying a plurality of display frames arranged in a table on a display screen, each of the display frames enabling display of a plurality of information pieces, and a selected display frame being enlargeable, while non-selected display frames are reduced according to an enlargement ratio of the enlarged display frame, wherein:

each information candidate to be displayed in respective display frames includes an attribute of a display priority and an attribute of a display character size; and
an information display operation is carried out, based on a size of each of the display frames, by deciding the display priority and the display character size of each of the information candidates to be displayed in the respective display frames.

**20.** A medium having the information display program of claim 19 stored thereon.

# Fig.1

EP 2 172 926 A1

# Fig.2

| 2007/1 | | | | | | | |
|---|---|---|---|---|---|---|---|
| SUN | MON | TUE | WED | THU | FRI | SAT | |
| 31 | 1 | 2 | 3 | 4 ● | 5 | 6 | |
| 7 | 8 ● | 9 ● | 10 | 11 | 12 | 13 | |
| 14 | 15 | 16 ANY INFORMATION TO BE DISPLAYED ● | 17 | 18 | 19 | 20 | |
| 21 | 22 | 23 | 24 | 25 | 26 | 27 | |
| 28 | 29 ● | 30 | 31 | 1 | 2 | 3 | |
| 4 | 5 | 6 | 7 | 8 | 9 | 10 | |

# Fig.3

EP 2 172 926 A1

# Fig.4A

| 2007/1 | | | | | | |
|---|---|---|---|---|---|---|
| SUN | MON | TUE | WED | THU | FRI | SAT |
| 31 | 1 | 2<br><br>MEETING<br>DRINKING<br>PARTY | 3 | 4 | 5 | 6 |
| 7 | 8<br><br>DRIVE<br>MEAL | 9 | 10 | 11<br><br>MEETING | 12 | 13 |
| 14 | 15 | 16<br><br>MEETING<br>DRINKING<br>PARTY | 17 | 18 | 19<br><br>BUSINESS<br>TRIP | 20 |
| 21 | 22<br><br>DRINKING<br>PARTY | 23 | 24<br><br>MEETING | 25 | 26<br><br>DRIVE | 27 |
| 28 | 29 | 30<br><br>BUSINESS<br>TRIP | 31 | 1 | 2 | 3 |
| 4 | 5 | 6 | 7 | 8 | 9 | 10 |

# Fig.4B

| 2007/1 | | | | | | |
|---|---|---|---|---|---|---|
| SUN | MON | TUE | WED | THU | FRI | SAT |
| 31 | 1 | 2<br><br>13:00 MEETING<br>20:00 DRINKING PARTY | 3 | 4 | 5 | 6 |
| 7 | 8<br><br>DRIVE<br>MEAL | 9 | 10 | 11<br><br>MEETING | 12 | 13 |
| 14 | 15 | 16<br><br>9:00～10:00<br>MEETING<br>18:00～21:00<br>DRINKING PARTY | 17 | 18 | 19<br><br>BUSINESS TRIP | 20 |
| 21 | 22<br><br>DRINKING PARTY | 23 | 24<br><br>MEETING | 25 | 26<br><br>DRIVE | 27 |
| 28 | 29 | 30<br><br>9:30 BUSINESS TRIP | 31 | 1 | 2 | 3 |
| 4 | 5 | 6 | 7 | 8 | 9 | 10 |

# Fig.4C

| 2007/1 | | | | | | | |
|--------|-----|-----|-----|-----|-----|-----|-----|
| SUN | MON | TUE | WED | THU | FRI | SAT |
| 31 | 1 | 2<br><br>13:00～14:00 MEETING | 3 | 4 | 5 | 6 |
| 7 | 8 🚗 | 9 | 10 | 11 🖥 | 12 | 13 |
| 14 | 15 | **16**<br><br>**9:00～10:00**<br>**MEETING**<br>**MEETING FOR NEW PRODUCTS**<br>**IN MEETING ROOM A**<br>**18:00～21:00**<br>**DRINKING PARTY**<br>**JUNIOR HIGH SCHOOL**<br>**ALUMNI ASSOCIATION** | 17 | 18 | 19<br><br>BUSINESS TRIP | 20 |
| 21 | 22 ☕ | 23 | 24 🖥 | 25 | 26 🚗 | 27 |
| 28 | 29 | 30<br>9:30～21:00 BUSINESS TRIP | 31 | 1 | 2 | 3 |
| 4 | 5 | 6 | 7 | 8 | 9 | 10 |

# Fig.5

# Fig.6A

# Fig.6B

Fig.7A

X CHARACTERS

MO

FRAME WIDTH

CHARACTER SIZE

MO

Y LINES

FRAME HIGHT

MO

MO

Fig.7B

DATE

1 LINE

1st SCHEDULE

S LINES

2nd SCHEDULE

N-th SCHEDULE

# Fig. 8A

IN CASE OF Y=1

| DATE | START TIME | FINISH TIME | SCHEDULE TITLE | : PAT1 |

| DATE | START TIME | SCHEDULE TITLE | : PAT2 |

| DATE | SCHEDULE TITLE | : PAT3 |

| DATE | : PAT4 |

IN CASE OF Y=2

| DATE | | | |
| --- | --- | --- | --- |
| START TIME | FINISH TIME | SCHEDULE TITLE | } : PAT5 |

| DATE | | |
| --- | --- | --- |
| START TIME | SCHEDULE TITLE | } : PAT6 |

| DATE | |
| --- | --- |
| SCHEDULE TITLE | } : PAT7 |

IN CASE OF X>2, Y>2 & S=1

| DATE | | | | |
| --- | --- | --- | --- | --- |
| START TIME | FINISH TIME | SCHEDULE TITLE | 1st SCHEDULE | |
| START TIME | FINISH TIME | SCHEDULE TITLE | 2nd SCHEDULE | } : PAT8 |
| ... | ... | ... | ... | |

| DATE | | | |
| --- | --- | --- | --- |
| START TIME | SCHEDULE TITLE | 1st SCHEDULE | |
| START TIME | SCHEDULE TITLE | 2nd SCHEDULE | } : PAT9 |
| ... | ... | ... | |

| DATE | | |
| --- | --- | --- |
| SCHEDULE TITLE | 1st SCHEDULE | |
| SCHEDULE TITLE | 2nd SCHEDULE | } : PAT10 |
| ... | ... | |

# Fig. 8B

IN CASE OF X>2, Y>2 & S=2

| DATE | | | |
|---|---|---|---|
| START TIME | FINISH TIME | SCHEDULE TITLE | 1st SCHEDULE |
| SCHEDULE DETAILS | | | |
| START TIME | FINISH TIME | SCHEDULE TITLE | 2nd SCHEDULE |
| SCHEDULE DETAILS | | | |
| ... | ... | ... | ... |

}: PAT11

| DATE | | | |
|---|---|---|---|
| START TIME | FINISH TIME | SCHEDULE TITLE | 1st SCHEDULE |
| START TIME | FINISH TIME | SCHEDULE TITLE | 2nd SCHEDULE |
| ... | ... | ... | ... |

}: PAT12

| DATE | | |
|---|---|---|
| START TIME | SCHEDULE TITLE | 1st SCHEDULE |
| START TIME | SCHEDULE TITLE | 2nd SCHEDULE |
| ... | ... | ... |

}: PAT13

| DATE | |
|---|---|
| SCHEDULE TITLE | 1st SCHEDULE |
| SCHEDULE TITLE | 2nd SCHEDULE |
| ... | ... |

}: PAT14

| DATE | | |
|---|---|---|
| START TIME | FINISH TIME | 1st SCHEDULE |
| SCHEDULE TITLE | | |
| START TIME | FINISH TIME | 2nd SCHEDULE |
| SCHEDULE TITLE | | |
| ... | ... | ... |

}: PAT15

| DATE | | |
|---|---|---|
| START TIME | | 1st SCHEDULE |
| SCHEDULE TITLE | | |
| START TIME | | 2nd SCHEDULE |
| SCHEDULE TITLE | | |
| ... | ... | ... |

}: PAT16

# Fig. 8C

IN CASE OF X>2, Y>2 & S=3(SAME PROCESSING WHEN S>3)

| DATE | | | |
|---|---|---|---|
| START TIME | FINISH TIME | SCHEDULE TITLE | 1st SCHEDULE |
| SCHEDULE DETAILS | | | |
| START TIME | FINISH TIME | SCHEDULE TITLE | 2nd SCHEDULE |
| SCHEDULE DETAILS | | | |
| ... | ... | ... | ... |

: PAT17

| DATE | | | |
|---|---|---|---|
| START TIME | FINISH TIME | SCHEDULE TITLE | 1st SCHEDULE |
| SCHEDULE DETAILS | | | |
| START TIME | FINISH TIME | SCHEDULE TITLE | 2nd SCHEDULE |
| SCHEDULE DETAILS | | | |
| ... | ... | ... | ... |

: PAT18

| DATE | | | |
|---|---|---|---|
| START TIME | FINISH TIME | SCHEDULE TITLE | 1st SCHEDULE |
| START TIME | FINISH TIME | SCHEDULE TITLE | 2nd SCHEDULE |
| ... | ... | ... | ... |

: PAT19

| DATE | | |
|---|---|---|
| START TIME | SCHEDULE TITLE | 1st SCHEDULE |
| START TIME | SCHEDULE TITLE | 2nd SCHEDULE |
| ... | ... | ... |

: PAT20

# Fig.8D

IN CASE OF X>2, Y>2 & S=3 (SAME PROCESSING WHEN S>3)

| DATE | 1st SCHEDULE |
|---|---|
| SCHEDULE TITLE | |
| SCHEDULE TITLE | 2nd SCHEDULE |
| ... | ... |

: PAT21

| DATE | |
|---|---|
| START TIME | FINISH TIME |
| SCHEDULE TITLE | 1st SCHEDULE |
| SCHEDULE DETAILS | |
| START TIME | FINISH TIME |
| SCHEDULE TITLE | 2nd SCHEDULE |
| SCHEDULE DETAILS | |
| ... | ... | ... |

: PAT22

| DATE | |
|---|---|
| START TIME | 1st SCHEDULE |
| SCHEDULE TITLE | |
| START TIME | 2nd SCHEDULE |
| SCHEDULE TITLE | |
| ... | ... |

: PAT23

IN CASE OF X=2, Y>2

| DATE | |
|---|---|
| SCHE | 1st SCHEDULE |
| DU | |
| LE | |
| TI | |
| TLE | |
| ... | ON AND AFTER 2nd SCHEDULE |

: PAT24

33

# Fig.9

INPUT SECTION — 201

DISPLAY SECTION
OF DISPLAY FRAMES — 203

200 — REPEAT BASED ON THE
NUMBER OF DISPLAY FRAMES

204 — DISPLAY INFORMATION
DECISION SECTION

202 — MEMORY SECTION
(DATABASE)

INFORMATION
DISPLAY SECTION — 205

206 — DISPLAY DEVICE

EP 2 172 926 A1

# Fig.10A

START

ST1 — DEFINE CHARACTER SIZE F1:
$F1=12 \times (H \div 48)$

ST2 — DEFINE CHARACTER SIZE F2:
$F2=12 \times (W \div 33)$

ST3 — DEFINE F WITH SMALLER ONE BETWEEN CHARACTER SIZES F1 AND F2

ST4 — $F > 24$ ?

Yes → ST5 — DEFINE CHARACTER SIZE F:F=24

No

ST6 — $F < 6$ ?

Yes → ST7 — DEFINE CHARACTER SIZE F:F=6

No

ST8 — DEFINE LINE NUMBER Y INSERTED IN LONGITUDINAL DIRECTION:$Y=H \div F$

ST9 — DEFINE CHARACTER NUMBER X INSERTED IN LATERAL DIRECTION:$X=W \div F$

ST10 — FETCH SCHEDULE OF PARTICULAR DAY FROM DATABASE

ST11 — DEFINE SCHEDULE NUMBER P

AA

35

# Fig.10B

# Fig.10C

# Fig.10D

```
                    ( CC )
                       │
                       ▼
        ┌──────────────────────────────┐
        │ DEFINE SHARED LINE NUMBER S  │──── ST26
        │ FOR ONE SCHEDULE:S=(Y-1)÷P   │
        └──────────────────────────────┘
                       │
         ST27          ▼
              ◇─────────────────◇        No
              ◇      S=0        ◇───────────────────┐
              ◇       ?         ◇                   │
                    Yes │                           │
                        ▼  ┌────────┐               │
                        │  │  S=1   │── ST28         │
         ST29           ▼  └────────┘         ST30   │
        ┌──────────────────────────┐   ┌──────────────────────────┐
        │ DEFINE DISPLAYABLE       │   │ DEFINE DISPLAYABLE       │
        │ SCHEDULE NUMBER U:U=Y-1  │   │ SCHEDULE NUMBER U:U=P    │
        └──────────────────────────┘   └──────────────────────────┘
                        │                           │
                        ▼◄──────────────────────────┘
        ┌──────────────────────────────┐
        │ DEFINE Tmax WITH LARGEST ONE │──── ST31
        │ AMONG CHARACTER NUMBERS T1～TU│
        └──────────────────────────────┘
                        │
         ST32           ▼
              ◇─────────────────────◇      No
              ◇   S×X>Tmax+3        ◇────────────────┐
              ◇       ?             ◇                │
                    Yes │                            │
         ST33           ▼                            │
              ◇─────────────────◇    No              │
              ◇    X≧3          ◇──────────────────► │
              ◇     ?           ◇             ST34    ▼
                    Yes │            ┌──────────────────────────────────┐
                        │            │ USE SHARED REGION AS SCHEDULE    │
                        │            │ TITLE, SUCH AS PATTERNS          │
                        │            │ PT7,PT10,PT14 OR PT21            │
                        │            └──────────────────────────────────┘
                        │                            │
                        │       ST35 ┌──────────────────────────────┐
                        │            │ DISPLAY CHARACTER STRING     │
                        │            │ IN EACH ARRANGED REGION      │
                        │            └──────────────────────────────┘
                        │                            │
                        ▼                            ▼
                     ( DD )                      (  END  )
```

DEFINE SHARED LINE NUMBER S FOR ONE SCHEDULE: $S=(Y-1)\div P$ — ST26

ST27: $S=0$ ?

ST28: $S=1$

ST29: DEFINE DISPLAYABLE SCHEDULE NUMBER U: $U=Y-1$

ST30: DEFINE DISPLAYABLE SCHEDULE NUMBER U: $U=P$

ST31: DEFINE Tmax WITH LARGEST ONE AMONG CHARACTER NUMBERS $T1\sim TU$

ST32: $S\times X>Tmax+3$ ?

ST33: $X\geqq 3$ ?

ST34: USE SHARED REGION AS SCHEDULE TITLE, SUCH AS PATTERNS PT7, PT10, PT14 OR PT21

ST35: DISPLAY CHARACTER STRING IN EACH ARRANGED REGION

# Fig.10E

# Fig.10F

# Fig.11A

# Fig.11B

220

210

230

ENLARGE

REDUCE

# Fig.12

EP 2 172 926 A1

| | | | |
|---|---|---|---|
| **INTERNATIONAL SEARCH REPORT** | | International application No. | |
| | | PCT/JP2007/063154 | |

**A. CLASSIFICATION OF SUBJECT MATTER**
*G09G5/36*(2006.01)i, *G06F3/048*(2006.01)i, *G06F17/21*(2006.01)i, *G06Q10/00* (2006.01)i

According to International Patent Classification (IPC) or to both national classification and IPC

**B. FIELDS SEARCHED**

Minimum documentation searched (classification system followed by classification symbols)
G09G5/00-5/42, G06F3/048, 3/14-3/153, 17/21, G06Q10/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho   1971-2007   Toroku Jitsuyo Shinan Koho    1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-106336 A   (Sharp Corp.), | 1,6,9-11,17, |
| | 22 April, 1997 (22.04.97), | 19,20 |
| Y | Par. Nos. [0021] to [0031], [0036] to [0048]; | 2,13 |
| | Figs. 1 to 3, 9 to 12 | |
| | & US 5874965 A | |
| Y | JP 4-244877 A   (Casio Computer Co., Ltd.), | 2 |
| | 01 September, 1992 (01.09.92), | |
| | Claim 1 | |
| | (Family: none) | |
| Y | JP 2007-94182 A   (Fujitsu Ltd.), | 2,13 |
| | 12 April, 2007 (12.04.07), | |
| | Par. No. [0004] | |
| | (Family: none) | |

[X] Further documents are listed in the continuation of Box C.          [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| 10 September, 2007 (10.09.07) | 18 September, 2007 (18.09.07) |
| Name and mailing address of the ISA/ | Authorized officer |
| Japanese Patent Office | |
| Facsimile No. | Telephone No. |

Form PCT/ISA/210 (second sheet) (April 2005)

| INTERNATIONAL SEARCH REPORT | International application No. |
|---|---|
| | PCT/JP2007/063154 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 11-296280 A  (Sharp Corp.),<br>29 October, 1999 (29.10.99),<br>Par. Nos. [0080] to [0094]; Figs. 12 to 15<br>& US 6750888 B1 | 1,2,6,9-11,<br>13,17,19,20 |

Form PCT/ISA/210 (continuation of second sheet) (April 2005)

**INTERNATIONAL SEARCH REPORT**

International application No.

PCT/JP2007/063154

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
    The technical feature common to the inventions of claims 1-20 is the technical feature disclosed in claim 1.
    However, the search has revealed that the technical feature is not novel since it is disclosed in Document JP 9-106336 A (Sharp Corp.), 22 April, 1997 (22.04.97), [0021]-[0031], [0036]-[0048].

    (Continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1, 2, 6, 9-11, 13, 17, 19, 20

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2007/063154

Continuation of Box No.III of continuation of first sheet(2)

As a result, the technical feature makes no contribution over the prior art and the technical feature cannot be a special technical feature within the meaning of PCT Rule 13.2, second sentence.

Accordingly, there exists no technical feature common to all the inventions of claims 1-20.
Since there exists no other common feature which can be considered as a special technical feature within the meaning of PCT Rule 13.2, second sentence, no technical relationship within the meaning of PCT Rule 13 between the different inventions can be seen.

Consequently, it is obvious that the inventions of claims 1-20 do not satisfy the requirement of unity of invention.

It should be noted that the technical features disclosed in claims 6, 9-11, 13, 17, 19, 20 make no contribution over the prior art, either.

Therefore, the inventions of claims 1-20 are divided into the following groups:
(1) claims 1, 2, 6, 9-11, 13, 17, 19, 20
(2) claims 3-5, 18
(3) claims 7, 8
(4) claim 12
(5) claim 14
(6) claim 15
(7) claim 16

Form PCT/ISA/210 (extra sheet) (April 2005)

**EP 2 172 926 A1**

## REFERENCES CITED IN THE DESCRIPTION

**Patent documents cited in the description**

- JP 2000357036 A

- JP 2004021704 A